# EUROPÄISCHE PATENTANMELDUNG

(11) **EP 3 561 576 A1**
(43) Veröffentlichungstag der Anmeldung: **30.10.2019**
(21) Anmeldenummer: 18169133.8
(22) Anmeldetag: 24.04.2018
(51) Int. Cl.: G02C 7/02, B29D 11/00

(54) **BRILLENGLAS UMFASSEND WENIGSTENS EIN DÜNNSTGLAS UND VERFAHREN ZU DESSEN HERSTELLUNG**

(71) Anmelder: Carl Zeiss Vision International GmbH, 73430 Aalen (DE)
(72) Erfinder: Glöge, Thomas, 73614 Schorndorf (DE); Gromotka, Jeremias, 73433 Aalen (DE)
(74) Vertreter: Carl Zeiss AG - Patentabteilung

(57) **Zusammenfassung**

Die vorliegende Erfindung betrifft ein Brillenglas umfassend wenigstens ein Dünnstglas, wobei das Brillenglas nach Aufprall einer 15,87 mm großen und 16,36 g schweren Stahlkugel aus einer Höhe von 1,27 m keine Beschädigung aufweist.

## Beschreibung

Die vorliegende Erfindung betrifft ein Brillenglas umfassend wenigstens ein Dünnstglas, wobei das Brillenglas nach Aufprall einer 15,87 mm großen und 16,36 g schweren Stahlkugel aus einer Höhe von 1,27 m keine Beschädigung aufweist. Weiterhin betrifft die vorliegende Erfindung wenigstens ein Verfahren zur Herstellung eines derartigen Brillenglases.

EP 0 028 975 A1 beschreibt eine Kompositlinse, in welcher eine, ein organisches Material umfassende, Linse zwischen zwei Glasfilmen angeordnet ist. Hierbei soll das organische Material, welches bei der Herstellung der Kompositlinse zwischen die zwei Glasfilme eingegossen wird, ohne Schrumpf polymerisierbar sein. In der Kompositlinse weist das organische Material bevorzugt eine Mittendicke > 1 mm auf. Die zwei Glasfilme weisen jeweils eine Mittendicke von 0,1 mm bis 0,5 mm auf. Gemäß EP 0 028 975 A1 vereint die hierin beschriebene Kompositlinse die Vorteile von mineralischem Glas in Bezug auf beispielsweise die Kratzfestigkeit mit den Vorteilen von organischen Materialien in Bezug auf das Gewicht. EP 0 028 975 A1 enthält keinen Hinweis darauf, die jeweilige Mittendicke der Glasfilme bzw. die Dicke der Glasfilme über die gesamte Glasfläche zu reduzieren.

US 3,998,531 beschreibt eine ophthalmische Linse bestehend aus einem transparenten Kunststoffmaterial, dessen Vorderfläche und dessen Rückfläche jeweils mit einem Glas belegt sind. Das Glas hat jeweils eine Dicke in der Größenordnung von 1 mm. Das Kunststoffmaterial weist einen höheren Brechungsindex als das Glas auf. Zur Herstellung dieser ophthalmischen Linse wird das Kunststoffmaterial unter Zuführung von Wärme und Druck auf das jeweilige Glas zwischen den beiden Gläsern geformt und mit den beiden Gläsern verbunden. Die ophthalmische Linse weist ein geringes Gewicht auf und ist kratzbeständig. US 3,998,531 enthält keinen Hinweis dahingehend, dass die Dicke des jeweiligen Glases reduziert werden kann. US 3,998,531 enthält weiterhin keinen Hinweis darauf, die hier beschriebene ophthalmische Linse mit einem Kunststoffmaterial, welches einen niedrigeren oder gleichen Brechungsindex wie die beiden Gläser aufweist, bereitzustellen.

EP 0 182 503 A2 offenbart ein ophthalmisches Kompositbrillenglas, welches objektseitig eine dünne Glasschicht mit einer Dicke von 0,5 mm bis 2,0 mm und augenseitig eine Kunststoffschicht umfasst. Da die Glasschicht beim Formranden, insbesondere in Verbindung mit einer dünnen Kunststoffschicht brechen kann, liegt die Mittendicke der Glasschicht in dem Kompositbrillenglas zwischen 1,2 mm und 1,4 mm. Die Glasschicht und die Kunststoffschicht sind durch einen hochelastischen Klebstoff miteinander verbunden. Die Rückfläche der Glasschicht hat hier eine andere Krümmung als die Vorderfläche der Kunststoffschicht. Die dadurch insbesondere am Rand entstehende Lücke wird von dem eingesetzten Klebstoff ausgefüllt. Das Kompositbrillenglas weist ein geringeres Gewicht als ein entsprechendes Brillenglas aus mineralischem Glas auf. Da die Glasschicht dem Kompositbrillenglas Stabilität verleiht, kann die Kunststoffschicht auf eine geringere Dicke reduziert werden, als dies bei einem herkömmlichen auf Kunststoff basierenden Brillenglas der Fall wäre. Des Weiteren soll das EP 0 182 503 A2 offenbarte Kompositbrillenglas die von der US Food and Drug Administration in Bezug auf Brillengläser geforderte Schlagzähigkeit und Splitterfestigkeit erfüllt werden.

Aufgabe der vorliegenden Erfindung war es, ein Brillenglas bereitzustellen, welches ein attraktives kosmetisches Erscheinungsbild aufweist und dennoch gleichzeitig die FDA Erfordernisse in Bezug auf Schlagzähigkeit und Splitterfestigkeit erfüllt. Des Weiteren war es Aufgabe der vorliegenden Erfindung ein Verfahren zur Herstellung des Brillenglases zur Verfügung zu stellen.

Diese Aufgabe wurde gelöst durch Bereitstellung eines Brillenglases gemäß Anspruch 1. Diese Aufgabe wurde des Weiteren gelöst durch Bereitstellung eines Verfahrens zur Herstellung gemäß der Ansprüche 12 und 13.

Brillengläser können gemäß DIN EN ISO 13666:2013-10, Absatz 8.1, nach ihrer Funktion eingeteilt werden. Unter Brillengläser werden im Rahmen der vorliegenden Erfindung bevorzugt afokale Brillengläser oder Nullgläser gemäß DIN EN ISO 13666:2013-10, Absatz 8.2.3, also Brillengläser mit der nominalen dioptrischen Wirkung Null, und Korrektions-Brillengläser gemäß DIN EN ISO 13666:2013-10, Absatz 8.1.3, also Brillengläser mit dioptrischer Wirkung. Dioptrische Wirkung ist gemäß DIN EN ISO 13666:2013-10, Absatz 9.3 der Sammelbegriff für die fokussierende und die prismatische Wirkung eines Brillenglases.

Die FDA Erfordernisse in Bezug auf die Schlagzähigkeit und die Splitterfestigkeit von Brillengläsern sind in 21CFR801.410 geregelt. Gemäß dem dort beschriebenen Kugelfalltest muss ein Brillenglas den Aufprall einer 15,87 mm großen und 16,36 g schweren Stahlkugel aus einer Höhe von 1,27 m ohne zu zerbrechen überstehen.

Insbesondere für Brillengläser mit negativem Scheitelbrechwert oder Minusgläser, welche gemäß DIN EN ISO 13666:2013-10, Abschnitt 9.14, als Brillengläser definiert sind, welche parallel auftreffendes Licht divergent macht, so dass es von einem virtuellen Brennpunkt der Brillengläser herzukommen scheint, ist vor dem Hintergrund des zu bestehenden Kugelfalltests das kosmetische Erscheinungsbild oft unattraktiv. Die Mittendicke eines Minusglases ist oftmals nicht aus produktionstechnischen Gründen, sondern im Hinblick auf die zu bestehenden FDA Erfordernisse in Bezug auf den Kugelfalltest bedingt. Eine höhere Mittendicke bedingt wiederum eine höhere Randdicke des Brillenglases, welches Minusgläser oftmals über den Fassungsrand hinausstehen und optisch unattraktiv wirken lässt.

Die Mittendicke ist gemäß DIN EN ISO 13666:2013-10, Abschnitt 8.1.14, die Dicke eines Brillenglases, gemessen im optischen Mittelpunkt oder Konstruktions-Bezugspunkt bzw., bei einem Gleitsichtglas oder einem degressiven Brillenglas, im Prismenbezugspunkt.

Die Randdicke ist gemäß DIN EN ISO 13666:2013-10, Abschnitt 8.1.15, die Dicke an einem Punkt auf dem Rand des gerandeten oder ungerandeten Brillenglases, gemessen näherungsweise parallel zur optischen Achse.

Die erfindungsgemäßen Brillengläser umfassen an der objektseitigen Vorderfläche des Brillenglases wenigstens eine Komponente A umfassend wenigstens ein Dünnstglas. Auf der gegenüberliegenden, augenseitigen Rückfläche des Brillenglases kann Komponente C ebenfalls ein Dünnstglas umfassen, wobei das Dünnstglas der Komponente A und das Dünnstglas der Komponente C identisch oder verschieden voneinander sein kann. Die Dünnstgläser der beiden Komponenten A und C können beispielsweise identisch in Bezug auf die Glaskomposition, auf die mittlere Dicke oder auf die Form sein. Die Glaskomposition, die mittlere Dicke und/oder die Form des Dünnstglases der Komponente A kann aber auch verschieden zu der Glaskomposition, der mittleren Dicke und/oder der Form des Dünnstglases der Komponente C sein. Beispielsweise kann das Dünnstglas der Komponente A und das Dünnstglas der Komponente C auf einer identischen Glaskomposition basieren, die mittlere Dicke und/oder die Form der beiden Dünnstgläser können verschieden voneinander sein.

Die Mittendicke der erfindungsgemäßen Brillengläser umfassend die Komponenten A, B und C bzw. umfassend die Komponenten A und B bzw. umfassend die Komponenten B und C liegt bevorzugt in einem Bereich von 0,34 mm bis 2,22 mm, weiter bevorzugt in einem Bereich von 0,40 mm bis 2,02 mm, weiter bevorzugt 0,41 mm bis 1,84 mm, weiter bevorzugt in einem Bereich von 0,47 mm bis 1,75 mm, besonders bevorzugt in einem Bereich von 0,59 mm bis 1,73 mm und ganz besonders bevorzugt in einem Bereich von 0,70 mm bis 1,71 mm. Für die Mittendicke der erfindungsgemäßen Brillengläser ist die vorstehende Definition gemäß DIN EN ISO 13666:2013-10, Abschnitt 8.1.14 anzuwenden.

Trotz der geringen Mittendicke bestehen die erfindungsgemäßen Brillengläser die FDA Anforderungen in Bezug auf Schlagzähigkeit und Splitterfestigkeit und überstehen den vorstehend beschriebenen Kugelfalltest ohne zu zerbrechen und ohne jegliche Beschädigung. Ohne Beschädigung bedeutet, dass das Brillenglas nach dem Kugelfalltest kein Fehlerbild aufweist. Unter kein Fehlerbild ist zu verstehen, dass das erfindungsgemäße keine Absplitterung, keinen Stern und keinen Kratzer aufweist, sondern den Kugelfalltest unverändert übersteht, d.h. dass kein Unterschied im optischen Erscheinungsbild des Brillenglases vor und nach dem Kugelfalltest sichtbar ist.

Ein für einen Brillenträger nicht zu vernachlässigender Vorteil der erfindungsgemäßen Brillengläser ist weiterhin, dass diese die vorteilhaften Eigenschaften von mineralischem Glas in Bezug auf beispielsweise die Härte und Kratzbeständigkeit und die vorteilhaften Eigenschaften von polymerem Material in Bezug auf das Gewicht miteinander verbinden. Darüber hinaus wird die höhere Dichte des auf mineralischem Glas basierenden Dünnstglases durch die sehr geringe Mittendicke des Brillenglases überkompensiert, so dass kein Gewichtsnachteil für einen Brillenträger entsteht.

Das Dünnstglas der Komponente A bzw. der Komponente C kann auf diversen Glaskompositionen basieren. Die Komponente A und die Komponente C kann ein in Bezug auf die Glaskomposition identisches oder voneinander verschiedenes Dünnstglas umfassen. Bei der Glaskomposition für die Dünnstgläser kann es sich beispielsweise um Borosilikatglas, Aluminium-Borosilikatglas oder alkalifreies Borosilikatglas handeln. Bevorzugt basiert das Dünnstglas der Komponente A bzw. der Komponente C jeweils auf einem Borosilikatglas oder einem Aluminium-Borosilikatglas.

Das Dünnstglas der Komponente A bzw. der Komponente C weist jeweils bevorzugt eine mittlere Dicke aus einem Bereich von 10 µm bis 250 µm, weiter bevorzugt aus einem Bereich von 13 µm bis 240 µm, weiter bevorzugt aus einem Bereich von 16 µm bis 230 µm, besonders bevorzugt aus einem Bereich von 18 µm bis 220 µm und ganz besonders bevorzugt aus einem Bereich von 19 µm bis 210 µm auf. Insbesondere bevorzugt weist das Dünnstglas der Komponente A bzw. das Dünnstglas der Komponente C jeweils eine mittlere Dicke aus einem Bereich von 90 µm bis 120 µm auf.
Unter der mittleren Dicke des Dünnstglases der Komponente A bzw. der Komponente C wird jeweils das arithmetische Mittel verstanden, sofern nicht anders angeben.
Unterhalb einer mittleren Dicke von 10 µm ist das Dünnstglas der Komponente A bzw. der Komponente C mechanisch zu instabil, um in einem der nachstehend beschriebenen Verfahren zur Herstellung eines erfindungsgemäßen Brillenglases zum Einsatz kommen zu können. Oberhalb einer mittleren Dicke von 210 µm kann das Dünnstglas der Komponente A bzw. der Komponente C zu erfindungsgemäßen Brillengläsern führen, welche eine zu große Randdicke oder eine zu große Mittendicke des Brillenglases aufweisen würden.
Die mittlere Dicke des Dünnstglases der Komponenten A bzw. C wird jeweils vorzugsweise mit dem Messgerät Filmetrics F10-HC (Firma Filmetrics Inc.) vermessen. Die mittlere Dicke des Dünnstglases der Komponenten A bzw. C wird jeweils vorzugsweise anhand des Dünnstglases in der Form, wie es tatsächlich zum Einsatz kommt, bestimmt. Die mittlere Dicke des Dünnstglases der Komponenten A bzw. C wird somit jeweils entweder anhand eines planen Dünnstglases oder anhand eines umgeformten Dünnstglases vor dem Zusammenfügen mit der Komponente B bestimmt. Alternativ kann die mittlere Dicke des Dünnstglases der Komponenten A bzw. C jeweils mittels einer rasterelektronenmikroskopischen Aufnahme anhand eines Querschliffs bestimmt werden. Die Bestimmung der jeweiligen mittleren Dicke mittels einer rasterelektronenmikroskopischen Aufnahme kann entweder anhand des Dünnstglases der Komponente A, anhand des Dünnstglases der Komponente C oder anhand des erfindungsgemäßen Brillenglases umfassend die Komponenten A, B und C erfolgen. Hierzu wird die Dicke des Dünnstglases der Komponente A bzw. der Komponente C jeweils an wenigstens 100 Stellen bestimmt und statistisch gemittelt. Bevorzugt erfolgt die Bestimmung der mittleren Dicke des Dünnstglases der Komponente A bzw. der Komponente C mittels einer rasterelektronenmikroskopischen Aufnahme anhand eines Querschliffs des erfindungsgemäßen Brillenglases. Sofern weitere Komponenten im erfindungsgemäßen Brillenglas zugegen sind, erfolgt die Bestimmung von deren jeweiliger mittlerer Dicke ebenfalls wie vorstehend beschrieben.

Bei einer Ausführungsform beträgt die relative Standardabweichung der Dickenverteilung des Dünnstglases der Komponente A bzw. C jeweils 0,1% bis 100%, bevorzugt 0,2% bis 81%, besonders bevorzugt 0,3% bis 66% und ganz besonders bevorzugt 0,4% bis 24%. Die relative Standardabweichung in [%] ist dabei der Quotient aus berechneter Standardabweichung und mittlerer Dicke.

Das Dünnstglas der Komponente A und der Komponente C kann jeweils die gleiche mittlere Dicke aufweisen. Die mittleren Dicken der Dünnstgläser der Komponenten A und C können auch voneinander verschieden sein. Bevorzugt sind die mittleren Dicken der Dünnstgläser der Komponenten A und C jeweils gleich.

Das Dünnstglas der Komponente A bzw. der Komponente C weist jeweils bevorzugt eine Oberflächenrauigkeit Ra von < 1 nm auf. Weiter bevorzugt liegt die Oberflächenrauigkeit Ra des Dünnstglases der Komponente A bzw. der Komponente C jeweils in einem Bereich von 0,1 nm bis 0,8 nm, besonders bevorzugt in einem Bereich von 0,3 nm bis 0,7 nm und ganz besonders bevorzugt in einem Bereich von 0,4 nm bis 0,6 nm. Vorstehend genannte Werte für die Oberflächenrauigkeit Ra beziehen sich jeweils auf die Vorderfläche und die Rückfläche des Dünnstglases der Komponente A bzw. C eines nicht umgeformten, planen Dünnstglases. Nach einer Umformung gelten vorstehend genannte Werte jeweils nur für diejenige Fläche des Dünnstglases, welche nicht mit dem Formkörper in Kontakt gebracht wurde. In Abhängigkeit vom zur Umformung eingesetzten Formkörper können vorstehend genannte Werte auch für die Fläche des Dünnstglases gelten, welche mit dem zur Umformung eingesetzten Formkörper in Kontakt war. Die Oberflächenrauigkeit Ra des Dünnstglases der Komponente A bzw. der Komponente C wird vorzugsweise mittels Weißlichtinterferometrie, vorzugsweise mit dem Gerät NewView 7100 (Firma Zygo Corporation), bestimmt.

Weist das Dünnstglas der Komponente A bzw. der Komponente C weitere oberflächliche Unebenheiten auf, so kann die flächenmäßige Analyse der jeweiligen Oberfläche weiterhin durch phasenmessende Deflektometrie, vorzugsweise mit dem Gerät SpecGage (Firma 3D-Shape GmbH), bestimmt werden.

Die Transformationstemperatur T_{G} des Dünnstglases der Komponente A bzw. des Dünnstglases der Komponente C liegt jeweils bevorzugt in einem Bereich von 400°C bis 800°C, weiter bevorzugt in einem Bereich von 430°C bis 770°C, besonders bevorzugt in einem Bereich von 490°C bis 740°C und ganz besonders bevorzugt in einem Bereich von 530°C bis 730°C. Die Transformationstemperatur T_{G} des Dünnstglases der Komponente A bzw. C kann jeweils mittels dynamisch-mechanischer Analyse, bevorzugt mit dem Messgerät DMA 8000 Dynamic Mechanical Analyzer (Firma Perkin Elmer Inc.), oder mittels dynamischer Differenzkalorimetrie, bevorzugt mit dem Messgerät DSC204CEL mit Controller TASC414/3A oder CC2001 (jeweils Firma Erich NETZSCH GmbH & Co. Holding KG), bestimmt. Bevorzugt wird die Transformationstemperatur T_{G} des Dünnstglases der Komponente A bzw. C jeweils mittels dynamischer Differenzkalorimetrie bestimmt.

Der Ausdehnungskoeffizient des Dünnstglases der Komponente A bzw. der Komponente C liegt jeweils bevorzugt in einem Bereich von 1,8·10⁻⁶K⁻¹ bis 9,1·10⁻⁶K⁻¹, weiter bevorzugt in einem Bereich von 2,1·10⁻⁶K⁻¹ bis 8,8·10⁻⁶K⁻¹, besonders bevorzugt in einem Bereich von 2,6·10⁻⁶K⁻¹ bis 8,2·10⁻⁶K⁻¹ und ganz besonders bevorzugt in einem Bereich von 3,0·10⁻⁶K⁻¹ bis 7,4- 10⁻⁶K⁻¹, jeweils bezogen auf den Temperaturbereich von 20°C bis 300°C. Der Ausdehnungskoeffizient des Dünnstglases der Komponente A bzw. der Komponente C wird bevorzugt jeweils mittels Dilatometrie, bevorzugt mit dem Messgerät DIL 402 E/7 (Firma Erich NETZSCH GmbH & Co. Holding KG), erfasst.

Das Dünnstglas der Komponente A bzw. der Komponente C umfasst bevorzugt jeweils keine Farbmittel. Weiterhin bevorzugt liegt die Transmission des Dünnstglases der Komponente A bzw. der Komponente C im Wellenlängenbereich von 400 nm bis 800 nm jeweils bei ≥ 90%, besonders bevorzugt bei ≥ 92%. Die Transmission des Dünnstglases der Komponente A bzw. der Komponente C wird bevorzugt mittels eines UV/VIS Spektralphotometers, bevorzugt mit dem Messgerät LAMBDA 950 UV/Vis/NIR Spectrophotometer (Firma Perkin Elmer Inc.), bestimmt.

Das Dünnstglas der Komponente A bzw. der Komponente C weist jeweils bevorzugt einen Brechungsindex aus einem Bereich von n = 1,490 bis n = 1,950, weiter bevorzugt aus einem Bereich von n = 1,501 bis n = 1,799, besonders bevorzugt aus einem Bereich von n = 1,510 bis n = 1,755 und ganz besonders bevorzugt aus einem Bereich von n = 1,521 bis n= 1,747 auf, wobei der Brechungsindex für die Wellenlänge der Natrium-D-Linie angeben ist. Der Brechungsindex des jeweiligen Dünnstglases der Komponente A bzw. der Komponente C ist bevorzugt an die jeweils direkt angrenzende Funktionsschicht und/oder die jeweils direkt angrenzende Komponente, vorzugsweise Komponente B, angepasst. An den jeweiligen Grenzflächen Dünnstglas/ Funktionsschicht, Dünnstglas/ weitere Komponente des erfindungsgemäßen Brillenglases, vorzugsweise Komponente B oder Dünnstglas/ Klebemittel ist der Brechungsindexunterschied jeweils bevorzugt kleiner als 0,03, besonders bevorzugt kleiner als 0,01, unabhängig davon, ob es sich um das Dünnstglas der Komponente A, das Dünnstglas der Komponente C oder das Dünnstglas einer weiteren Komponente des erfindungsgemäßen Brillenglases handelt. Bei einer Ausführungsform der Erfindung weisen sämtliche Bestandteile des erfindungsgemäßen Brillenglases, also das Dünnstglas der Komponente A bzw. C, Komponente B, weitere optionale Komponenten des erfindungsgemäßen Brillenglases, das oder die optional verwendete(n) Klebemittel sowie sämtliche Funktionsschichten, ausgenommen der mehrschichtigen Beschichtungen, wie beispielsweise einer mehrschichtigen Entspiegelungsschicht oder einer mehrschichtigen Verspiegelungsschicht, welche innerhalb des erfindungsgemäßen Brillenglases, vorzugsweise zwischen den Komponenten A und C angeordnet sind, den gleichen Brechungsindex auf. Bei dieser Ausführungsform wird unter gleichem Brechungsindex ein Brechungsindexunterschied aus einem Bereich von 0,005 bis 0,015 toleriert. Der Brechungsindex des Dünnstglases der Komponente A und der Komponente C, der Komponente B sowie weiterer Komponenten des erfindungsgemäßen Brillenglases wird vorzugsweise refraktometrisch an den jeweiligen Bestandteilen des erfindungsgemäßen Brillenglases separat bestimmt. Als Messgerät kann beispielsweise das Gerät Anton Paar Abbemat MW (Firma Anton Paar GmbH) eingesetzt werden.

Das Dünnstglas der Komponente A bzw. der Komponente C weist jeweils bevorzugt eine Abbezahl aus einem Bereich von 20 bis 85, weiter bevorzugt aus einem Bereich von 23 bis 74, besonders bevorzugt aus einem Bereich von 29 bis 66 und ganz besonders bevorzugt aus einem Bereich von 33 bis 61 auf. Bei einer Ausfiihrungsform der Erfindung weisen sämtliche Bestandteile des erfindungsgemäßen Brillenglases, also das Dünnstglas der Komponente A bzw. C, Komponente B, weitere optionale Komponenten des erfindungsgemäßen Brillenglases, das oder die optional verwendete(n) Klebemittel sowie sämtliche vorhandenen Funktionsschichten, ausgenommen der mehrschichtigen Beschichtungen, wie beispielsweise einer mehrschichtigen Entspiegelungsschicht oder einer mehrschichtigen Verspiegelungsschicht, welche innerhalb des erfindungsgemäßen Brillenglases, vorzugsweise zwischen den Komponenten A und C angeordnet sind, die gleiche Abbezahl auf. Bei dieser Ausfiihrungsform wird unter gleicher Abbezahl ein Unterschied der Abbezahl aus einem Bereich von 0,1 bis 5, bevorzugt aus einem Bereich von 0,1 bis 2,1 toleriert. Je höher der Brechungsindex sämtlicher Bestandteile des erfindungsgemäßen Brillenglases ist, desto größere Unterschiede der Abbezahl werden toleriert.

Bei einer Ausfiihrungsform der Erfindung weist das Dünnstglas der Komponente A bzw. der Komponente C sowie das organische Material der Komponente B oder das mineralische Glas der Komponente B jeweils bei einem gegebenen Brechungsindex n eine möglichst hohe Abbezahl auf.

Bei einer Ausfiihrungsform der Erfindung weist das Dünnstglas der Komponente A bzw. der Komponente C jeweils eine Transformationstemperatur T_{G} aus einem Bereich von 421°C bis 781°C, bevorzugt aus einem Bereich von 501°C bis 766°C, sowie für den Temperaturbereich von 20°C bis 300°C jeweils einen Ausdehnungskoeffizienten aus einem Bereich von 2,9·10⁻⁶K⁻¹ bis 8,3·10⁻⁶K⁻¹, bevorzugt aus einem Bereich von 3,1·10⁻⁶K⁻¹ bis 7,3·10⁻⁶K⁻¹, auf. Bei dieser Ausfiihrungsform können die Transformationstemperatur T_{G} und/oder der Ausdehnungskoeffizient des Dünnstglases der Komponente A und des Dünnstglases der Komponente C jeweils gleich oder verschieden sein.

Bei einer weiteren Ausfiihrungsform der Erfindung weist das Dünnstglas der Komponente A bzw. der Komponente C jeweils eine mittlere Dicke aus einem Bereich von 17 µm bis 190 µm, bevorzugt aus einem Bereich von 24 µm bis 166 µm, sowie eine Transformationstemperatur T_{G} aus einem Bereich von 510°C bis 730°C, bevorzugt aus einem Bereich von 555°C bis 721°C, auf. Bei dieser Ausfiihrungsform können die mittlere Dicke und/oder die Transformationstemperatur T_{G} des Dünnstglases der Komponente A und des Dünnstglases der Komponente C jeweils gleich oder verschieden sein.

Bei einer bevorzugten Ausführungsform weisen die Dünnstgläser der Komponenten A bzw. C sowie weitere optional vorhandene Dünnstgläser des erfindungsgemäßen Brillenglases keine photochromen Eigenschaften auf.

Dünnstgläser sind beispielsweise kommerziell erhältlich unter den Bezeichnungen D 263® T eco, D 263® LA eco, D 263® M, AF 32® eco, SCHOTT AS 87 eco, B 270® i, jeweils Firma Schott AG, Corning Willow Glass oder Corning Gorilla Glass, jeweils Firma Corning Inc.
Das Dünnstglas der Komponente A oder der Komponente C kann jeweils mit unterschiedlichen Formgebungen, beispielsweise plan oder in einer bestimmten Form vorliegen. Im Zusammenhang mit der Form des Dünnstglases wird unter "plan" verstanden, dass das Dünnstglas keine makroskopisch sichtbare Biegung oder Krümmung aufweist. Weisen die Dünnstgläser der Komponenten A und C eine nicht plane Oberfläche auf, kann eine gewünschte Oberflächentopographie, beispielsweise sphärisch oder torisch, durch Verformen eines planen Dünnstglases auf einer entsprechenden Negativform erreicht werden. Beispielsweise kann das Dünnstglas der Komponente A bzw. der Komponente C jeweils in Form einer sphärischen Linse mit einem bestimmten Krümmungsradius ausgestaltet sein. Die Form des Dünnstglases der Komponenten A bzw. C kann identisch oder verschieden voneinander sein. Zur Umformung eines planen Dünnstglases kann dieses zunächst, bevorzugt in Form eines Kreises, beispielsweise mittels eines Lasers, ausgeschnitten werden. Im Randbereich kann dieser ausgeschnittene Dünnstglaskreis anschließend abgeflammt werden, um eventuell entstandene Mikrorisse zu versiegeln. Um möglichst wenig Dünnstglasverschnitt zu erzeugen, wird der Ausschnitt des Dünnstglases so ausgewählt, dass nach dem Zusammenfügen der Komponenten A, B und C des erfindungsgemäßen Brillenglases möglichst wenig Dünnstglasüberschuss entfernt werden muss. Das ausgeschnittene Dünnstglas kann beispielsweise auf eine zur Umformung geeignete Formschale gelegt, gegebenenfalls mittels einer Halterung befestigt, und vorzugsweise zusammen mit der Formschale, gegebenenfalls zusammen mit der Halterung, bis zur Transformationstemperatur T_{G} der Glaskomposition oder bis zu einer Temperatur, welche vorzugsweise maximal 20°C über der Transformationstemperatur T_{G} der Glaskomposition liegt, erwärmt werden. Die Formschale kann beispielsweise konvex oder konkav ausgeformt sein. Beispielsweise wird das ausgeschnittene Dünnstglas mit Hilfe eines zur Formschale passenden Gegenstücks in diese hinein gedrückt oder der Dünnstglasausschnitt wird unter Anlegen von Vakuum und/oder einfach mittels Schwerkraft in die Formschale geformt. Bevorzugt ist eine Umformung des Dünnstglases unter Anlegen von Vakuum in eine Formschale. Das umgeformte Dünnstglas wird vorzugsweise komplett in oder über der Formschale abkühlen gelassen, bevor es von der Formschale getrennt wird. Die Umformung eines vorzugsweise planen Ausschnitts eines Dünnstglases erfolgt vorzugsweise in einer Schutzgasatmosphäre. Die Formschale kann hierbei als Negativform der bei der Umformung zu erzielenden Vorderfläche oder Rückfläche des Dünnstglases ausgestaltet sein. Beispielsweise kann die Formschale sphärisch, asphärisch rotationssymmetrisch, torisch, atorisch, als symmetrische Freiformfläche oder unsymmetrische Freiformfläche ausgeformt sein. Alternativ kann das Dünnstglas in nicht zugeschnittener Form, vorzugsweise planer Form, mit Hilfe eines Thermoformprozesses umgeformt werden. In Anwesenheit weiterer Komponenten des erfindungsgemäßen Brillenglases umfassend wenigstens ein Dünnstglas gelten vorstehende Ausführungen entsprechend.

Der Krümmungsradius eines Dünnstglases liegt bevorzugt in einem Bereich von 10 mm bis unendlich, bevorzugt in einem Bereich von 20 mm bis 1600 mm, weiter bevorzugt in einem Bereich von 35 mm bis 1535 mm, weiter bevorzugt in einem Bereich von 56 mm bis 600 mm, besonders bevorzugt in einem Bereich von 66 mm bis 481 mm und ganz besonders bevorzugt in einem Bereich von 75 mm bis 376 mm. Ein Krümmungsradius des Dünnstglases von unendlich entspricht hierbei einer planen Oberfläche. Bei nicht sphärischen Oberflächen des Dünnstglases beziehen sich die vorstehend angegebenen Krümmungsradien jeweils auf eine angenäherte sphärische Form.
Die zur Umformung einsetzbare Formschale umfasst vorzugsweise ein Material, welches sich spanend bearbeiten lässt, keine Strukturen im umgeformten Dünnstglas hervorruft und darüber hinaus mit dem Dünnstglas keine untrennbare Verbindung eingeht. Die Formschale kann beispielsweise aus Graphit, einer Metall(legierung) oder einer Keramik, wie beispielsweise in WO 2006/050891 A2 beschrieben, bestehen. Die Formschale kann weiterhin oberflächenmodifiziert sein, so dass eine Anhaftung des Dünnstglases weiter minimiert wird.

Die Vorderfläche des Dünnstglases V_{DA} der Komponente A ist diejenige Fläche des Dünnstglases, welche sich im erfindungsgemäßen Brillenglas objektseitig befindet. Die Vorderfläche des Dünnstglases V_{DC} der Komponente C ist diejenige Fläche des Dünnstglases, welche sich im erfindungsgemäßen Brillenglas objektseitig in Richtung der Komponente B bzw. in Richtung einer weiter objektseitig angeordneten Komponente des erfindungsgemäßen Brillenglases befindet. Die Rückfläche des Dünnstglases R_{DA} der Komponente A ist diejenige Fläche des Dünnstglases, welche im erfindungsgemäßen Brillenglas augenseitig in Richtung der Komponente B bzw. in Richtung einer weiter augenseitig angeordneten Komponente des erfindungsgemäßen Brillenglases angeordnet ist. Die Rückfläche des Dünnstglases R_{DC} der Komponente C ist diejenige Fläche des Dünnstglases, welche sich im erfindungsgemäßen Brillenglas augenseitig befindet. Sofern mehr als eine der Komponenten A, B und/oder C im erfindungsgemäßen Brillenglas zugegen ist, ist deren Vorderfläche jeweils als diejenige Fläche definiert, welche objektseitig angeordnet ist. Die Rückfläche ist dann entsprechend diejenige Fläche der jeweiligen Komponente, welche sich im erfindungsgemäßen Brillenglas augenseitig befindet.

Unter Funktionsschicht ist eine Schicht zu verstehen, welche dem Brillenglas bestimmte Eigenschaften verleiht. Eine Funktionsschicht kann beispielsweise eine Hartlackschicht, eine Entspiegelungsschicht, eine elektrisch leitfähige oder halbleitende Schicht, eine Verspiegelungsschicht, eine farbgebende Schicht, eine polarisierende Schicht, eine Antibeschlagsschicht oder eine Clean-Coat-Schicht sein.

Das Dünnstglas der Komponente A umfasst bevorzugt auf der Vorderfläche des Dünnstglases V_{DA} wenigstens eine Funktionsschicht F_{VA}. Die Funktionsschicht F_{VA} kann beispielsweise wenigstens eine Entspiegelungsschicht, wenigstens eine elektrisch leitfähige oder halbleitende Schicht, wenigstens eine Antibeschlagsschicht und/oder wenigstens eine Clean-Coat-Schicht umfassen. Bevorzugt umfasst die Funktionsschicht F_{VA} wenigstens eine Entspiegelungsschicht, besonders bevorzugt wenigstens eine Entspiegelungsschicht und wenigstens eine Clean-Coat-Schicht, wobei in letzterem Fall die Clean-Coat-Schicht die objektseitig äußerste Schicht des erfindungsgemäßen Brillenglases ist.

Das Dünnstglas der Komponente C umfasst bevorzugt auf der Rückfläche des Dünnstglases R_{DC} wenigstens eine Funktionsschicht F_{RC}. Die Funktionsschicht F_{RC} kann wie die Funktionsschicht F_{VA} beispielsweise eine Entspiegelungsschicht, wenigstens eine elektrisch leitfähige oder halbleitende Schicht, wenigstens eine Antibeschlagsschicht und/oder wenigstens eine Clean-Coat-Schicht umfassen. Bevorzugt umfasst die Funktionsschicht F_{RC} wenigstens eine Entspiegelungsschicht, besonders bevorzugt eine Entspiegelungsschicht und eine Clean-Coat-Schicht, wobei in letzterem Fall die Clean-Coat-Schicht die augenseitig äußerste Schicht des erfindungsgemäßen Brillenglases ist.

Die wenigstens eine Funktionsschicht F_{VA} der Vorderfläche V_{DA} des Dünnstglases der Komponente A und die wenigstens eine Funktionsschicht F_{RC} der Rückfläche R_{DC} des Dünnstglases der Komponente C können identisch oder verschieden voneinander sein. Bevorzugt sind die wenigstens eine Funktionsschicht F_{VA} und die wenigstens eine Funktionsschicht F_{RC} identisch.

Die Begriffe "Schicht" und "Beschichtung" werden im Rahmen dieser Erfindung austauschbar verwendet.

Umfasst die Funktionsschicht F_{VA} der Vorderfläche V_{DA} des Dünnstglases der Komponente A wenigstens eine Entspiegelungsschicht, so umfasst diese bevorzugt alternierende diskrete Metalloxid-, Metallhydroxid- und/oder Metalloxidhydratschichten aus oder mit Aluminium, Silizium, Zirkonium, Titan, Yttrium, Tantal, Neodym, Lanthan, Niob und/oder Praseodym. Bei einer Ausführungsform der Erfindung umfasst die Entspiegelungsschicht wenigstens eine Metalloxid-, Metallhydroxid- und/oder Metalloxidhydratschicht aus oder mit Silizium, wobei bevorzugt wenigstens eine Siliziumoxid-, Siliziumhydroxid- und/oder Siliziumoxidhydratschicht objektseitig die außenliegende Schicht der auf dem Dünnstglas der Komponente A vorliegenden Entspiegelungsschicht darstellt.

Umfasst die Funktionsschicht F_{RC} der Rückfläche R_{DC} des Dünnstglases der Komponente C wenigstens eine Entspiegelungsschicht, so umfasst diese bevorzugt alternierende diskrete Metalloxid-, Metallhydroxid- und/oder Metalloxidhydratschichten aus oder mit Aluminium, Silizium, Zirkonium, Titan, Yttrium, Tantal, Neodym, Lanthan, Niob und/oder Praseodym. Bei einer Ausführungsform der Erfindung umfasst die Entspiegelungsschicht wenigstens eine Metalloxid-, Metallhydroxid- und/oder Metalloxidhydratschicht aus oder mit Silizium, wobei bevorzugt wenigstens eine Siliziumoxid-, Siliziumhydroxid- und/oder Siliziumoxidhydratschicht augenseitig die außenliegende Schicht der auf der Komponente C vorliegenden Entspiegelungsschicht darstellt.

Bei einer weiteren Ausführungsform der Erfindung weist die wenigstens eine Entspiegelungsschicht des erfindungsgemäßen Brillenglases eine Gesamtschichtdicke aus einem Bereich von 97 nm bis 2000 nm, bevorzugt aus einem Bereich von 112 nm bis 1600 nm, weiter bevorzugt aus einem Bereich von 121 nm bis 1110 nm, besonders bevorzugt aus einem Bereich von 132 nm bis 760 nm und ganz besonders bevorzugt aus einem Bereich von 139 nm bis 496 nm auf. Die Entspiegelungsschicht umfasst hierbei bevorzugt eine Metalloxid-, Metallhydroxid- und/oder Metalloxidhydratschicht aus oder mit Silizium, welche bevorzugt die äußerste Schicht der Entspiegelungsschicht ausbildet. Unter äußerster Schicht wird in diesem Zusammenhang diejenige Schicht der Entspiegelungsschicht verstanden, welche sich im erfindungsgemäßen Brillenglas am weitesten augenseitig bzw. am weitesten objektseitig befindet.

Bei einer weiteren Ausfiihrungsform der Erfindung umfasst die Entspiegelungsschicht des erfindungsgemäßen Brillenglases ausgehend von der Vorderfläche V_{DA} des Dünnstglases der Komponente A bzw. ausgehend von der Rückfläche R_{DC} des Dünnstglases der Komponente C jeweils folgende Schichtenfolge:
a) Metalloxid, Metallhydroxid und/oder Metalloxidhydratschicht aus oder mit Titan,
b) Metalloxid, Metallhydroxid und/oder Metalloxidhydratschicht aus oder mit Silizium,
c) Metalloxid, Metallhydroxid und/oder Metalloxidhydratschicht aus oder mit Titan,
d) Metalloxid, Metallhydroxid und/oder Metalloxidhydratschicht aus oder mit Silizium,
e) Metalloxid, Metallhydroxid und/oder Metalloxidhydratschicht aus oder mit Titan,
f) Metalloxid, Metallhydroxid und/oder Metalloxidhydratschicht aus oder mit Silizium.

Bei einer weiteren Ausfiihrungsform der Erfindung umfasst die wenigstens eine Entspieglungsschicht des erfindungsgemäßen Brillenglases die in EP 2 437 084 A1, in den Figuren 3 und 5, jeweils die zwischen der superhydrohoben Schicht und der Hartlackschicht aufgezeigte Schichtenfolge und Schichtdicke. Bevorzugt ist im Rahmen dieser Erfindung die dort jeweils an die Hartlackschicht angrenzende Schicht augenseitig und die jeweils an die superhydrophobe Schicht angrenzende Schicht objektseitig im erfindungsgemäßen Brillenglas auf der Vorderfläche bzw. die dort jeweils an die Hartlackschicht angrenzende Schicht objektseitig und die jeweils an die superhydrophobe Schicht angrenzende Schicht augenseitig im erfindungsgemäßen Brillenglas auf der Rückfläche angeordnet.

Die Herstellung der wenigstens einen Entspiegelungsschicht des erfindungsgemäßen Brillenglases erfolgt vorzugsweise mittels PVD-Verfahren.

Umfasst die Funktionsschicht F_{VA} der Vorderfläche V_{DA} des Dünnstglases der Komponente A und/oder die Funktionsschicht F_{RC} der Rückfläche R_{DC} des Dünnstglases der Komponente C jeweils wenigstens eine elektrisch leitfähige oder halbleitende Schicht, kann diese beispielsweise eine Schicht aus oder mit Indium-Zinn-Oxid (((In₂O₃)_{0.9} (SnO₂)_{0.1}; ITO), Fluor-Zinn-Oxid (SnO₂:F; FTO), Aluminium-Zink-Oxid (ZnO:Al; AZO) und/oder Antimon-Zinn-Oxid (SnO₂:Sb; ATO) umfassen. Bevorzugt umfasst die elektrisch leitfähige oder halbleitende Schicht eine Schicht aus oder mit ITO bzw. aus oder mit FTO. Eine objektseitig oder augenseitig als äußerste Funktionsschicht des erfindungsgemäßen Brillenglases angeordnete elektrisch leitfähige oder halbleitende Schicht vermindert oder vermeidet die statische Aufladung des erfindungsgemäßen Brillenglases. Dies wiederum erleichtert die Reinigung des erfindungsgemäßen Brillenglases. Bei einer Ausführungsform der Erfindung kann die elektrisch leitfähige oder halbleitende Schicht eine Schicht der Entspiegelungsschicht sein.

Umfasst die Funktionsschicht F_{VA} der Vorderfläche V_{DA} des Dünnstglases der Komponente A und/oder die Funktionsschicht F_{RC} der Rückfläche R_{DA} des Dünnstglases der Komponente C jeweils wenigstens eine Antibeschlagsschicht, umfasst diese bevorzugt ein Silanderivat gemäß EP 2 664 659 A1, besonders bevorzugt gemäß Anspruch 4 der EP 2 664 659 A1. Alternativ kann die Antibeschlagsschicht auch gemäß dem in DE 10 2015 209 794 A1 beschriebenen Verfahren, insbesondere gemäß des in Anspruch 1 der DE 10 2015 209 794 A1 beschriebenen Verfahrens, hergestellt werden. Die Antibeschlagsschicht kann direkt auf die Vorderfläche V_{DA} des Dünnstglases der Komponente A oder auf einer auf der Vorderfläche V_{DA} vorhandenen Entspiegelungsschicht aufgebracht werden. Wird die Antibeschlagsschicht auf einer Entspiegelungsschicht der Komponente A aufgebracht, umfasst die objektseitig außenliegende Schicht der Entspiegelungsschicht bevorzugt eine Metalloxid-, Metallhydroxid- und/oder Metalloxidhydratschicht aus oder mit Silizium. Die Antibeschlagsschicht kann direkt auf die Rückfläche R_{DC} des Dünnstglases der Komponente C oder auf einer auf der Rückfläche R_{DC} vorhandenen Entspiegelungsschicht aufgebracht werden. Wird die Antibeschlagsschicht auf einer Entspiegelungsschicht der Komponente C aufgebracht, umfasst die augenseitig außenliegende Schicht der Entspiegelungsschicht bevorzugt eine Metalloxid-, Metallhydroxid- und/oder Metalloxidhydratschicht aus oder mit Silizium.

Umfasst die Funktionsschicht F_{VA} der Vorderfläche V_{DA} des Dünnstglases der Komponente A und/oder die Funktionsschicht F_{RC} der Rückfläche R_{DC} des Dünnstglases der Komponente C jeweils wenigstens eine Clean-Coat-Schicht, umfasst diese vorzugsweise ein Material mit oleophoben und hydrophoben Eigenschaften, wie beispielsweise in EP 1 392 613 A1 offenbart, auf dem Wasser einen Kontaktwinkel von mehr als 90°, bevorzugt von mehr als 100° und besonders bevorzugt mehr als 110° einnimmt. Die Clean-Coat-Schicht umfasst bevorzugt eine fluororganische Schicht mit kovalenter Anbindung an das Substrat gemäß DE 198 48 591 A1, Anspruch 1, oder eine Schicht auf Basis von Perfluorpolyethern.

Bei einer Ausführungsform der Erfindung ist die Vorderfläche V_{DA} des Dünnstglases der Komponente A ausgehend von der Vorderfläche V_{DA} in Richtung des Objekts bzw. die Rückfläche R_{DC} des Dünnstglases der Komponente C ausgehend von der Rückfläche R_{DC} jeweils mit folgenden Funktionsschichten F_{VA} bzw. F_{RC} belegt:
a) optional wenigstens eine elektrisch leitfähige oder halbleitende Schicht,
b) wenigstens eine Entspiegelungsschicht,
c) wenigstens eine Antibeschlagsschicht oder wenigstens eine Clean-Coat-Schicht.
Bei dieser Ausführungsform kann die optional vorhandene wenigstens eine elektrisch leitfähige oder halbleitende Schicht auch als Bestandteil der wenigstens einen Entspiegelungsschicht vorliegen, d.h. wenigstens eine der zur Entspiegelungsschicht gehörenden Schichten kann auf der Vorderfläche V_{DA} des Dünnstglases der Komponente A vorliegen, objektseitig gefolgt von der elektrisch leitfähigen oder halbleitenden Schicht, den restlichen zur Entspiegelungsschicht gehörenden Schichten sowie weiter objektseitig gefolgt von der Antibeschlagsschicht oder der Clean-Coat-Schicht. Entsprechendes gilt augenseitig auf der Rückfläche R_{DC} des Dünnstglases der Komponente C.

Das Dünnstglas der Komponente A umfasst bevorzugt auf der Rückfläche des Dünnstglases R_{DA}, d.h. der Fläche des Dünnstglases, welche im erfindungsgemäßen Brillenglas in Richtung der Komponente B bzw. in Richtung einer weiter objektseitig angeordneten Komponente des erfindungsgemäßen Brillenglases gerichtet ist, wenigstens eine Funktionsschicht F_{RA}. Die Funktionsschicht F_{RA} kann beispielsweise wenigstens eine farbgebende Schicht, wenigstens eine photochrome Schicht, wenigstens eine polarisierende Schicht und/oder wenigstens eine Verspiegelungsschicht umfassen.

Bei einer Ausführungsform der Erfindung kann die wenigstens eine Funktionsschicht F_{RA} der wenigstens einen Funktionsschicht F_{VB} entsprechen, wobei in Anwesenheit mehrerer Funktionsschichten F_{RA} bzw. F_{VB} die bevorzugte Schichtenfolge zwischen den Komponenten A und B des erfindungsgemäßen Brillenglases beachtet werden muss.

Umfasst die Funktionsschicht F_{RA} der Rückfläche R_{DA} des Dünnstglases der Komponente A wenigstens eine farbgebende Schicht, umfasst diese bevorzugt eine färbbare Schicht gemäß US 4,355,135 A, insbesondere gemäß Anspruch 1 der US 4,355,135 A, gemäß US 4,294,950 A, insbesondere gemäß einem der Ansprüche 1 oder 6 der US 4,294,950 A oder gemäß US 4,211,823 A, insbesondere gemäß einem der Ansprüche 1 oder 2 der US 4,211,823 A. Besonders bevorzugt umfasst die farbgebende Schicht eine färbbare Schicht gemäß US 4,355,135 A. Das zur Einfärbung einsetzbare Farbmittel kann beispielsweise aus der Gruppe bestehend aus C.I. Disperse Yellow 5, C.I. Disperse Yellow 13, C.I. Disperse Yellow 33, C.I. Disperse Yellow 42, C.I. Disperse Yellow 51, C.I. Disperse Yellow 54, C.I. Disperse Yellow 64, C.I. Disperse Yellow 71, C.I. Disperse Yellow 86, C.I. Disperse Yellow 114, C.I. Disperse Yellow 201, C.I. Disperse Yellow 211, C.I. Disperse Orange 30, C.I. Disperse Orange 73, C.I. Disperse Red 4, C.I. Disperse Red 11, C.I. Disperse Red 15, C.I. Disperse Red 55, C.I. Disperse Red 58, C.I. Disperse Red 60, C.I. Disperse Red 73, C.I. Disperse Red 86, C.I. Disperse Red 91, C.I. Disperse Red 92, C.I. Disperse Red 127, C.I. Disperse Red 152, C.I. Disperse Red 189, C.I. Disperse Red 229, C.I. Disperse Red 279, C.I. Disperse Red 302, C.I. Disperse Red 302:1, C.I. Disperse Red 323, C.I. Disperse Blue 27, C.I. Disperse Blue 54, C.I. Disperse Blue 56, C.I. Disperse Blue 73, C.I. Disperse Blue 280, C.I. Disperse Violet 26, C.I. Disperse Violet 33, C.I. Solvent Yellow 179, C.I. Solvent Violet 36, C.I. Pigment Blue 15, C.I. Pigment Blue 80, C.I. Pigment Green 7, C.I. Pigment Orange 36, C.I. Pigment Orange 36, C.I. Pigment Yellow 13, C.I. Pigment Violet 23, C.I. Pigment Violet 37, C.I. Pigment Black 1, C.I. Pigment Black 6 und C.I. Pigment Black 7 ausgewählt sein.
Alternativ hierzu kann die farbgebende Schicht auch mittels einer Farbmittel umfassenden Drucktinte, insbesondere 3D-Drucktinte, aufgebracht werden.

Umfasst die Funktionsschicht F_{RA} wenigstens eine photochrome Schicht, umfasst diese bevorzugt eine Schicht gemäß US 2006/0269741 A1, insbesondere gemäß US 2006/0269741 A1, Anspruch 6, oder eine Schicht gemäß US 2004/0220292 A1, insbesondere gemäß US 2004/0220292 A1, Anspruch 1. Die photochrome Schicht weist bevorzugt eine mittlere Dicke aus einem Bereich von 5 µm bis 200 µm, weiter bevorzugt aus einem Bereich von 9 µm bis 166 µm, besonders bevorzugt aus einem Bereich von 17 µm bis 121 µm und ganz besonders bevorzugt aus einem Bereich von 21 µm bis 81 µm auf.

Umfasst die Funktionsschicht F_{RA} wenigstens eine polarisierende Schicht, umfasst diese vorzugsweise entweder eine Polarisationsfolie oder eine Schicht mit polarisierenden Eigenschaften. Als Polarisationsfolie kann eine Folie aus beispielsweise Polyvinylalkohol oder Polyethylenterephthalat eingesetzt werden, welche dichroitische Farbmittel umfasst. Die Polarisationsfolie kann einen einschichtigen oder mehrschichtigen Folienaufbau aufweisen. Bei einer Ausführungsform der Erfindung kann die Polarisationsfolie einen mehrschichtigen Aufbau aufweisen, welcher wenigstens eine Folienschicht mit dichroitischen Farbmitteln, wenigstens eine stabilisierende Folienschicht und wenigstens eine Folienschicht mit dichroitischen Farbmitteln oder ohne dichroitische Farbmittel umfasst. Die dichroitische Farbmittel umfassende Folienschicht kann bei dieser Ausführungsform ebenso wie die Folienschicht ohne dichroitische Farbmittel jeweils beispielsweise eine Folienschicht aus Polyvinylalkohol, Polyvinylformal, Polyvinylbutyral oder Polyvinylacetat umfassen. Alternativ zu dichroitischen Farbmitteln, wie beispielsweise C.I. Direct Blue 67, C.I. Direct Blue 90, C.I. Direct Blue 200, C.I. Direct Green 59, C.I. Direct Violet 48, C.I. Direct Red 39, C.I. Direct Red 81, C.I. Direct Red 83, C.I. Direct Red 89, C.I. Direct Orange 39, C.I. Direct Orange 72, C.I. Direct Yellow 34, C.I. Direct Green 26, C.I. Direct Green 27, C.I. Direct Green 28, C.I. Direct Green 51 und/oder C.I. Direct Black 170 kann auch Iod eingesetzt werden. Die stabilisierende Folienschicht kann bei dieser Ausführungsform beispielsweise Polyethylenterephthalat, Polymethacrylat, Polymethylmethacrylat, Polycarbonat, Celluloseacetatbutyrat und/oder Triacetylcellulose umfassen. Bei einer weiteren Ausführungsform der Erfindung kann die Polarisationsfolie passgenau zur Rückfläche des Dünnstglases der Komponente A vorgeformt vorliegen. Bevorzugt wird die Polarisationsfolie unter Anlegen von Vakuum unter Zuhilfenahme einer Metallform vorgeformt.

Eine Schicht mit polarisierenden Eigenschaften ist beispielsweise in EP 1 965 235 A1, EP 0 217 502 A1, EP 1 674 898 A1, US 2006/0066947 A1, WO 2005/050265 A1, WO 2009/029198 A1, WO 2009/156784 A1 oder WO 2015/160612 A1 offenbart. In vorstehend genannten Anmeldungen ist die Schicht mit polarisierenden Eigenschaften jeweils Bestandteil einer dort beschriebenen Schichtenfolge. Im Rahmen dieser Erfindung wird vorzugsweise nur die in den genannten Anmeldungen beschriebene Schicht mit polarisierenden Eigenschaften als polarisierende Schicht eingesetzt. Bei einer Ausführungsform der Erfindung kann das Dünnstglas der Komponente A beispielsweise mittels einer Formschale umgeformt werden, welche auf derjenigen Oberfläche des Dünnstglases, welche während des Umformvorgangs mit der Oberfläche der Formschale in Kontakt gekommen ist, eine regelmäßige, vorzugsweise lineare Oberflächenstrukturierung hinterlässt. Diese Oberflächenstrukturierung kann dahingehend ausgenutzt werden, dass die zur Herstellung der Schicht mit polarisierenden Eigenschaften einsetzbaren dichroitischen Farbmittel diese Oberflächenstrukturierung ausfüllen und somit im Unterschied zu vorstehend zitierten Anmeldung der dort notwendige Schritt der Mikrorissbildung bzw. die zur Oberflächenstrukturierung notwendige Beschichtung nicht mehr notwendig ist. Bei einer bevorzugten Ausführungsform umfasst die Funktionsschicht F_{RA} als polarisierende Schicht eine Polarisationsfolie, vorzugsweise eine Polarisationsfolie mit einem mehrschichtigen Folienaufbau.

Umfasst die Funktionsschicht F_{RA} wenigstens eine Verspiegelungsschicht, umfasst diese vorzugsweise alternierende dielektrische Schichten im Sinne eines Bragg-Spiegels und/oder wenigstens eine semitransparente Metallschicht. Bei der Verspiegelungsschicht handelt es sich bevorzugt um eine semitransparente Metallschicht. Die wenigstens eine semitransparente Metallschicht kann beispielsweise eine Aluminiumschicht, Chromschicht, Goldschicht und/oder eine Silberschicht umfassen. Die Schichtdicke der semitransparenten Metallschicht liegt bevorzugt in einem Bereich von 4 nm bis 48 nm, besonders bevorzugt in einem Bereich von 8 nm bis 41 nm und ganz besonders bevorzugt in einem Bereich von 17 nm bis 33 nm. Die wenigstens eine semitransparente Metallschicht wird vorzugsweise mittels eines PVD-Verfahrens auf die Rückfläche des Dünnstglases R_{DA} der Komponente A aufgebracht.

Bei einer Ausführungsform der Erfindung umfasst die Rückfläche des Dünnstglases R_{DA} der Komponente A eine Verspiegelungsschicht als Funktionsschicht F_{RA} und die Vorderfläche des Dünnstglases V_{DA} der Komponente A keine Entspiegelungsschicht. Bei dieser Ausführungsform kann das erfindungsgemäße Brillenglas auf der Rückfläche des Dünnstglases R_{DC} der Komponente C bzw. augenseitig an die Funktionsschicht Fc der Komponente C angrenzend eine Entspiegelungsschicht umfassen. Auf diese Weise kann sichergestellt werden, dass weniger störende Reflexe von der augenseitigen Rückfläche des erfindungsgemäßen Brillenglases in das Auge gelangen. Alternativ kann das erfindungsgemäße Brillenglas auf der Rückfläche des Dünnstglases R_{DC} der Komponente C bzw. augenseitig an die Funktionsschicht F_{C} der Komponente C angrenzend eine Entspiegelungsschicht und eine Clean-Coat-Schicht umfassen, wobei die Clean-Coat-Schicht die augenseitig nächstliegende Schicht darstellt.

Bei einer weiteren Ausführungsform der Erfindung umfasst die Rückfläche des Dünnstglases R_{DA} der Komponente A eine Verspiegelungsschicht als Funktionsschicht F_{RA} und die Vorderfläche des Dünnstglases V_{DA} der Komponente A eine Clean-Coat-Schicht. Bei dieser Ausführungsform kann das erfindungsgemäße Brillenglas auf der Rückfläche des Dünnstglases R_{DC} der Komponente C bzw. augenseitig an die Funktionsschicht Fc der Komponente C angrenzend eine Entspiegelungsschicht oder eine Entspiegelungsschicht und eine Clean-Coat-Schicht umfassen, wobei in letzterem Fall die Clean-Coat-Schicht die augenseitig äußerste Schicht ist.

Bei einer bevorzugten Ausführungsform der Erfindung umfasst die Rückfläche des Dünnstglases R_{DA} der Komponente A genau einen Typ einer Funktionsschicht F_{RA}, wobei die Funktionsschicht F_{RA} aus der Gruppe, bestehend aus farbgebender Schicht, photochromer Schicht, polarisierender Schicht und Verspiegelungsschicht, ausgewählt sein kann.

Bei einer weiteren Ausfiihrungsform der Erfindung umfasst die Rückfläche des Dünnstglases R_{DA} der Komponente A mehrere Typen einer Funktionsschicht F_{RA}, wobei die Funktionsschicht F_{RA} aus der Gruppe, bestehend aus farbgebender Schicht, photochromer Schicht, polarisierender Schicht und Verspiegelungsschicht, ausgewählt sein kann. Bei dieser Ausfiihrungsform ist es bevorzugt, wenn im erfindungsgemäßen Brillenglas, ausgehend von der objektseitigen Vorderfläche zur gegenüberliegenden augenseitigen Rückfläche, eine der nachstehenden Kombinationen der Funktionsschicht F_{RA} in der angegebenen Reihenfolge zwischen den Komponenten A und B vorliegen:
Komponente A / photochrome Schicht / polarisierende Schicht / farbgebende Schicht / Komponente B,
Komponente A / photochrome Schicht / farbgebende Schicht / polarisierende Schicht / Komponente B,
Komponente A / photochrome Schicht / polarisierende Schicht / Verspiegelungsschicht / Komponente B,
Komponente A / photochrome Schicht / Verspiegelungsschicht / polarisierende Schicht / Komponente B,
Komponente A / photochrome Schicht / Verspiegelungsschicht / Komponente B,
Komponente A / Verspiegelungsschicht / polarisierende Schicht / farbgebende Schicht / Komponente B,
Komponente A / polarisierende Schicht / farbgebende Schicht / Komponente B,
Komponente A / Verspiegelungsschicht / polarisierende Schicht / Komponente B oder
Komponente A / Verspiegelungsschicht / farbgebende Schicht / Komponente B.

Bei einer Ausfiihrungsform der Erfindung umfasst das erfindungsgemäße Brillenglas die Komponenten A, B und C, wobei das Dünnstglas der Komponente A auf der Rückfläche des Dünnstglases R_{DA} keine Funktionsschicht F_{RA} aufweist. In diesem Fall können keine Schichten zwischen den Komponenten A und B im erfindungsgemäßen Brillenglas angeordnet sein und somit die Komponenten A und B direkt stoffschlüssig und/oder formschlüssig miteinander verbunden sein. Alternativ hierzu kann es sich bei der Komponente B um ein Brillenglas-Halbfertigprodukt handeln, dessen Vorderfläche mit wenigstens einer Funktionsschicht F_{VB} beschichtet ist, wobei die objektseitig äußerste Funktionsschicht F_{VB} der Komponente B dann stoffschlüssig und/oder formschlüssig mit der Rückfläche des Dünnstglases R_{DA} verbindbar ist.

Werden die einzelnen Komponenten getrennt voneinander prozessiert und vorbereitet, so kann im Vorhinein entschieden werden, welche Art von Schicht bevorzugt auf A, B oder C aufgebracht wird, um optimale Prozessbedingungen zu gewährleisten. So kann zum Beispiel die Komponente A und / oder C, sofern C ein Dünnstglas ist, mit den Bedampfungsparametern im PVD-Prozess für die Antireflexbeschichtung auf Mineralgläsern bearbeitet werden. Diese Parameter, die typischerweise die Anwendung von Temperaturen von größer 200°C bis 800°C, wie beispielsweise in der WO 98/45113 A1 oder der DE 10 2007 025 151 A beschrieben, umfassen, sind nicht mit den polymeren Materialien der Komponente B verträglich, so dass das erfindungsgemäße Brillenglas, dass die Komponenten A, B und C umfasst, nicht auf diesem Weg bearbeitet werden kann.

Im Rahmen dieser Erfindung werden unter "stoffschlüssigen Verbindungen" Verbindungen verstanden, welche die jeweiligen Komponenten des erfindungsgemäßen Brillenglases, vorzugsweise die Komponenten A und B bzw. die Komponenten B und C bzw. die Komponenten A und C zusammenhalten. Die Verbindung der einzelnen Komponenten kann hierbei direkt erfolgen, d.h. keine der beiden zu verbindenden Komponenten weist an derjenigen Oberfläche, welche mit der anderen Komponente verbunden werden soll eine Funktionsschicht auf. Alternativ kann wenigstens eine der Komponenten mit wenigstens einer Funktionsschicht belegt sein. In letzterem Fall erfolgt die stoffschlüssige Verbindung über die jeweils äußerste Funktionsschicht, welche der Oberfläche der anzubindenden Komponente bzw. deren äußerster Funktionsschicht zugewandt ist.
Im Rahmen dieser Erfindung werden unter "formschlüssigen Verbindungen" Verbindungen verstanden, bei denen die einzelnen Komponenten des erfindungsgemäßen Brillenglases, vorzugsweise die Komponenten A und B bzw. die Komponenten B und C bzw. die Komponenten A und C, passgenau zusammengefügt werden können. Zwischen den Komponenten A und C angeordnete Funktionsschichten weisen in der Regel die gleiche Oberflächentopographie wie die jeweils darunter liegende Oberfläche auf, so dass funktionsbeschichtete Komponenten formschlüssig verbindbar sind. Geringfügige Abweichungen in der Oberflächentopographie der beiden zusammenzufügenden Oberflächen können beispielsweise mittels eines Klebemittels verfüllt werden. Um die einzelnen Komponenten des erfindungsgemäßen Brillenglases formschlüssig miteinander verbinden zu können, sollten die Krümmungsradien der jeweils miteinander zu verbindenden Komponenten bevorzugt weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen. Sowohl stoffschlüssige als auch formschlüssige Verbindungen können beispielsweise durch Wärmebeaufschlagung und/oder durch Ansprengen und/oder mittels eines Klebemittels erreicht werden. Bei einer Ausführungsform der Erfindung umfasst das Dünnstglas der Komponente A auf der Vorderfläche des Dünnstglases V_{DA} keine Funktionsschicht F_{VA}.

Bei einer weiteren Ausführungsform der Erfindung umfasst das Dünnstglas der Komponente A auf der Vorderfläche des Dünnstglases V_{DA} wenigstens eine Funktionsschicht F_{VA} und auf der Rückfläche des Dünnstglases R_{DA} keine Funktionsschicht F_{RA}. Bei dieser Ausführungsform handelt es sich bei der wenigstens einen Funktionsschicht F_{VA} bevorzugt um eine Entspiegelungsschicht oder um eine Entspiegelungsschicht sowie eine Clean-Coat-Schicht, wobei in letzterem Fall die Clean-Coat-Schicht die objektseitig außenliegende Schicht ist.

Bei einer bevorzugten Ausführungsform umfasst das Dünnstglas der Komponente A auf der Vorderfläche des Dünnstglases V_{DA} wenigstens eine Funktionsschicht F_{VA} und auf der Rückfläche des Dünnstglases R_{DA} wenigstens eine Funktionsschicht F_{RA}. Bei dieser Ausführungsform umfasst die Funktionsschicht F_{VA} bevorzugt eine Entspiegelungsschicht und die Funktionsschicht F_{RA} bevorzugt eine photochrome Schicht.

Die Beschichtung des Dünnstglases der Komponente A mit wenigstens einer Funktionsschicht F_{VA} auf der Vorderfläche des Dünnstglases V_{DA} kann entweder vor dem Zusammenbringen der Komponente A mit den restlichen Komponenten des erfindungsgemäßen Brillenglases, vorzugsweise der Komponente B bzw. den Komponenten B und C, oder danach erfolgen. Bevorzugt wird die Vorderfläche des Dünnstglases V_{DA} des erfindungsgemäßen Brillenglases, d.h. des Brillenglases umfassend vorzugsweise wenigstens die Komponenten A, B und C, mit wenigstens einer Funktionsschicht F_{VA} beschichtet.

Die Beschichtung der Vorderfläche und/oder der Rückfläche des Dünnstglases der Komponente A kann in Abhängigkeit von der jeweils aufzubringenden Beschichtung vor oder nach der gegebenenfalls gewünschten Umformung des Dünnstglases erfolgen. Bevorzugt werden organische Schichten, wie beispielsweise eine photochrome Schicht oder eine Antibeschlagschicht, oder eine Polarisationsfolie nach der Umformung des Dünnstglases aufgebracht, während anorganische Schichten, wie beispielsweise eine Entspiegelungsschicht oder eine Verspiegelungsschicht, vor oder nach der Umformung des Dünnstglases aufgebracht werden können. Bevorzugt werden anorganische Funktionsschichten F_{VA} und/oder F_{RA} nach der Umformung des Dünnstglases der Komponente A auf dieses aufgebracht. Vorstehende Ausführungen gelten entsprechend für das optional vorhandene Dünnstglas der Komponente C.

Das Dünnstglas der Komponente C kann auf der Vorderfläche des Dünnstglases V_{DC} wenigstens eine Funktionsschicht F_{VC} umfassen. Die Funktionsschicht F_{VC} kann beispielsweise eine farbgebende Schicht umfassen. Weiterhin umfasst das Dünnstglas der Komponente C auf der Rückfläche des Dünnstglases R_{DC} bevorzugt wenigstens eine Funktionsschicht F_{RC}. Bei der Funktionsschicht F_{RC} kann es sich um wenigstens eine Entspiegelungsschicht, wenigstens eine Antibeschlagsschicht oder wenigstens eine Clean-Coat-Schicht handeln. Bevorzugt umfasst die Funktionsschicht F_{RC} wenigstens eine Entspiegelungsschicht und wenigstens eine Clean-Coat-Schicht, wobei die Clean-Coat-Schicht die äußerste augenseitige Schicht des erfindungsgemäßen Brillenglases ist. Vorstehende Schichten wurden bereits im Zusammenhang mit dem Dünnstglas der Komponente A detailliert beschrieben.

Die Beschichtung der Vorderfläche und/oder der Rückfläche des Dünnstglases der Komponente A bzw. der Komponente C kann jeweils mittels eines PVD-Verfahrens und/oder eines Schleuderbeschichtungsverfahrens erfolgen. Die anschließende Aushärtung der im Schleuderbeschichtungsverfahren erhaltenen Beschichtung kann entweder thermisch oder strahlungshärtend erfolgen. Bevorzugt erfolgt die Aushärtung dieser Beschichtung strahlungshärtend.

Umfassen die erfindungsgemäßen Brillengläser aneinandergrenzende Funktionsschichten, ist es für den Fachmann selbstverständlich, dass diese zueinander kompatibel sein müssen, um beispielsweise eine Separation des erfindungsgemäßen Brillenglases zu unterbinden.

Die Komponente C des erfindungsgemäßen Brillenglases kann zusätzlich oder alternativ zu einem Dünnstglas wenigstens eine Funktionsschicht F_{C} umfassen. In Abwesenheit eines Dünnstglases ist die Funktionsschicht F_{C} der Komponente C bevorzugt aus der Gruppe bestehend aus wenigstens einer Hartlackschicht, vorzugsweise einer Zusammensetzung für die Herstellung einer Beschichtung mit hoher Haftfestigkeit und hoher Kratzbeständigkeit, wie beispielsweise in EP 2 578 649 A1, insbesondere in EP 2 578 649 A1, Anspruch 1, beschrieben, wenigstens einer Entspieglungsschicht, wenigstens einer Antibeschlagsschicht, wenigstens einer Clean-Coat-Schicht und wenigstens einer elektrisch leitfähigen oder halbleitenden Schicht, ausgewählt. Ausgehend von der Rückfläche R_{B} des fertigen Brillenglases der Komponente B ist in Anwesenheit mehrerer Funktionsschichten Fc die Beschichtungsreihenfolge in Richtung Auge wie folgt:
a) optional wenigstens einer elektrisch leitfähigen oder halbleitenden Schicht,
b) wenigstens eine Entspiegelungsschicht,
c) wenigstens eine Antibeschlagsschicht oder wenigstens eine Clean-Coat-Schicht.
Die optional als Funktionsschicht Fc vorhandene elektrisch leitfähige oder halbleitende Schicht kann hierbei ein Bestandteil der Entspiegelungsschicht sein.

Bei einer Ausführungsform der Erfindung umfassen die erfindungsgemäßen Brillengläser keine Komponente B, sondern nur die Komponenten A und C. Bei dieser Ausführungsform umfassen die erfindungsgemäßen Brillengläser als Komponente A und C bevorzugt jeweils ein Dünnstglas, wobei das Dünnstglas der Komponente A und das Dünnstglas der Komponente C in Bezug auf die Glaskomposition und die Form vorzugsweise identisch ist. Die Vorderfläche des Dünnstglases V_{DA} der Komponente A ist auch bei dieser Ausführungsform bevorzugt mit wenigstens einer Funktionsschicht F_{VA}, die Rückfläche des Dünnstglases R_{DA} der Komponente A optional mit wenigstens einer Funktionsschicht F_{RA} beschichtet. Die Vorderfläche des Dünnstglases V_{DC} der Komponente C ist optional mit wenigstens einer Funktionsschicht F_{VC}, die Rückfläche des Dünnstglases R_{DC} der Komponente C bevorzugt mit wenigstens einer Funktionsschicht F_{RC} beschichtet. Die Funktionsschicht F_{RA} der Rückfläche des Dünnstglases R_{DA} der Komponente A bzw. die Funktionsschicht Fvc der Vorderfläche des Dünnstglases V_{DC} der Komponente C kann aus der Gruppe bestehend aus wenigstens einer farbgebenden Schicht, wenigstens einer photochromen Schicht, wenigstens einer polarisierenden Schicht und/oder wenigstens einer Verspiegelungsschicht ausgewählt sein. Bei dieser Ausführungsform müssen nicht alle zwischen den Komponenten A und C im erfindungsgemäßen Brillenglas angeordneten Funktionsschichten als wenigstens eine Funktionsschicht F_{RA} der Rückfläche R_{DA} der Komponente A bzw. als wenigstens eine Funktionsschicht Fvc der Vorderfläche V_{DC} der Komponente C vorliegen. Die Rückfläche R_{DA} des Dünnstglases der Komponente A und die Vorderfläche Fvc des Dünnstglases der Komponente C kann beispielsweise jeweils einen Teil der im erfindungsgemäßen Brillenglas umfassend die Komponenten A und C vorhandenen Funktionsschichten aufweisen. Beispielsweise kann die Funktionsschicht F_{RA} eine photochrome Schicht und die Funktionsschicht Fvc eine polarisierende Schicht umfassen. Bei der wenigstens einen Funktionsschicht F_{VA} der Vorderfläche des Dünnstglases V_{DA} der Komponente A bzw. der wenigstens einen Funktionsschicht F_{RC} der Rückfläche des Dünnstglases R_{DC} der Komponente C kann es sich um wenigstens eine Entspiegelungsschicht, wenigstens eine Antibeschlagschicht, wenigstens eine elektrisch leitfähige oder halbleitende Schicht und/oder wenigstens eine Clean-Coat-Schicht handeln. Bevorzugt ist bei dieser Ausführungsform, dass die Funktionsschicht F_{VA} der Vorderfläche des Dünnstglases V_{DA} der Komponente A und die Funktionsschicht F_{RC} der Rückfläche des Dünnstglases R_{DC} der Komponente C jeweils eine Entspiegelungsschicht und als jeweils äußerste Schicht objektseitig bzw. augenseitig eine Clean-Coat-Schicht umfasst. Die Komponenten A und C sind bei dieser Ausführungsform vorzugsweise stoffschlüssig und formschlüssig miteinander verbunden. Um eine Erhöhung der mechanischen Stabilität zu gewährleisten und/oder unterschiedliche Krümmungsradien der Dünnstgläser der Komponenten A und C zu berücksichtigen, kann bei dieser Ausführungsform ein Klebemittel zwischen den Komponenten A und C zugegeben sein. Im Hinblick auf die unterschiedlichen Krümmungsradien der Komponenten A und C gelten die vorstehend genannten Ausführungen, d.h. die Krümmungsradien sollten weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander abweichen. Weiterhin können unterschiedliche Oberflächentopographien der Dünnstgläser der Komponenten A und C bzw. der darauf optional vorhandenen Funktionsschichten F_{RA} bzw. F_{VC} mittels eines Klebemittels verfüllt werden. Die Oberflächentopographie der Funktionsschichten F_{RA} bzw. Fvc ist vorzugsweise an die Oberflächentopographie der Rückfläche des Dünnstglases R_{DA} der Komponente A bzw. der Vorderfläche des Dünnstglases V_{DC} der Komponente C angepasst.

Die Komponente B des erfindungsgemäßen Brillenglases umfasst wenigstens ein polymeres Material und/oder wenigstens ein mineralisches Glas.

Das polymere Material oder das mineralische Glas kann jeweils als Brillenglas-Halbfertigprodukt, d.h. als Linsenrohling mit nur einer optisch fertig bearbeiteten Fläche gemäß DIN EN ISO 13666:2013-10, Absatz 8.4.2, oder als fertiges Brillenglas, d.h. als Brillenglas mit zwei fertig bearbeiteten optischen Flächen vor oder nach der Randbearbeitung gemäß DIN EN ISO 13666:2013-10, Absatz 8.4.6, vorliegen kann. Die Brillenglas-Halbfertigprodukte können als Einstärken-Brillenglas-Halbfertigprodukte, Mehrstärken-Brillenglas-Halbfertigprodukte oder Gleitsicht-Brillenglas-Halbfertigprodukte gemäß DIN EN ISO 13666:2013-10, Absätze 8.4.3, 8.4.4 und 8.4.5, vorliegen. Bei den fertigen Brillengläsern kann es sich um Einstärken-Brillengläser, Mehrstärken-Brillengläser, Zweistärken-Brillengläser, Dreistärken-Brillengläser, Gleitsicht-Brillengläser oder degressive Brillengläser gemäß DIN EN ISO 13666:2013-10, Absätze 8.3.1, 8.3.2, 8.3.3, 8.3.4, 8.3.5 und 8.3.6 handeln. Die als Substrat einsetzbaren Brillenglas-Halbfertigprodukte bzw. fertigen Brillengläser können beispielsweise auf den in nachstehender Tabelle 1 genannten Grundmaterialien basieren.

**Tabelle 1: Beispiele für Grundmaterialien für Brillenglas-Halbfertigprodukte bzw. fertige Brillengläser**

| Handelsname | Grundmaterial | Mittlerer Brechungsindex n* | Abbe-Zahl v* |
|---|---|---|---|
| CR 39, CR 330, CR 607, CR 630, RAV 700, 7NG, 7AT, 710, 713, 720 | Polyallyldiglycolcarbonat ((P)ADC) | 1,500 | 56 |
| RAVolution | Polyharnstoff / Polyurethan | 1,500 | 54 |
| Trivex | Polyharnstoff / Polyurethan | 1,530 | 45 |
| Panlite, Lexan | Polycarbonat (PC) | 1,590 | 29 |
| MR 6 | Polythiourethan | 1,598 | |
| MR 8 | Polythiourethan | 1,598 | 41 |
| MR 7 | Polythiourethan | 1,664 | 32 |
| MR 10 | Polythiourethan | 1,666 | 32 |
| MR 174 | Polyepisulfid | 1,738 | 32 |
| MGC 1.76 | Polyepisulfid | 1,76 | 30 |
| | Mineral 1.5 | 1,525 | 58 |
| | Mineral 1.6 | 1,604 | 44 |
| | Mineral 1.7 | 1,701 | 39,2 |
| | Mineral 1.8 | 1,802 | 34,4 |
| | Mineral 1.9 | 1,885 | 30 |

| | | | |
|---|---|---|---|
| * Bezogen auf Natrium D-Linie | | | |

Die der optisch fertig bearbeiteten Fläche gegenüberliegende Fläche des Brillenglas-Halbfertigprodukts kann vor oder nach der Beschichtung der optisch fertig bearbeiteten Fläche des Brillenglas-Halbfertigprodukts bevorzugt durch mechanische Bearbeitung, wie beispielsweise Fräsen und/oder Schleifen und/oder Drehen und/oder Polieren, in die zweite optische fertig bearbeitete Fläche überführt werden. Bevorzugt erfolgt diese mechanische Bearbeitung vor der Beschichtung Brillenglas-Halbfertigprodukts.

Das Brillenglas-Halbfertigprodukt oder das fertige Brillenglas kann jeweils keine optische Korrektionswirkung aufweisen. Alternativ kann das Brillenglas-Halbfertigprodukt oder das fertige Brillenglas mit einer optischen Korrektionswirkung und/oder einer Bildfehlerkorrektion für das blickende Auge ausgestattet sein. Unter optischer Korrektionswirkung wird die sphärische Korrektion, die astigmatische Korrektion und die Korrektion der Achslage sowie optional die Korrektion durch ein Prisma mit Basislage verstanden. Diese optische Korrektionswirkung ist herkömmlicherweise für die Ferne in Einstärken-Brillengläsern verwirklicht. Bei Mehrstärken-Brillengläsern, Zweistärken-Brillengläsern, Dreistärken-Brillengläsern, Gleitsicht-Brillengläsern oder degressiven Brillengläsern kann die optische Korrektionswirkung für die Ferne und/oder für die Nähe jeweils eine sphärische Korrektion, eine astigmatische Korrektion, eine Korrektion der Achslage sowie optional eine Korrektion durch ein Prisma mit Basislage beinhalten. Die Bildfehlerkorrektion für das blickende Auge wird, unabhängig davon, ob es sich um eine Bildfehlerkorrektion für die Ferne oder für die Nähe handelt, bevorzugt analog zu Werner Köppen "Konzeption und Entwicklung von Gleitsichtgläsern", Deutsche Optiker Zeitschrift DOZ, Oktober 1995, Seite 42 - 45, berechnet.

Umfasst die Komponente B als polymeres Material wenigstens eine Kunststofffolie basiert diese bevorzugt auf Polyethylen, Polypropylen, Polyethylenterephthalat, Polycarbonat, Polymethylmethacrylat, Polyvinylchlorid, Polyvinylacetat, Polyvinylbutyrat und/oder Mischungen hiervon. Die wenigstens eine Kunststofffolie kann beispielsweise mit Cellulosetriacetat stabilisiert werden. Die wenigstens eine Kunststofffolie kann eingefärbt oder nicht eingefärbt sein. Soll das zu beschichtende, wenigstens eine Kunststofffolie und wenigstens ein Dünnstglas umfassende Substrat eingefärbt sein, ist bevorzugt die wenigstens eine Kunststofffolie eingefärbt. Die wenigstens eine Kunststofffolie weist bevorzugt eine mittlere Dicke aus einem Bereich von 9 µm bis 205 µm, besonders bevorzugt aus einem Bereich von 14 µm bis 103 µm auf. Bevorzugt weist die wenigstens eine Kunststofffolie einen Durchmesser auf, welcher ausreichend groß ist, dass die wenigstens eine Kunststofffolie die Vorderfläche des augenseitigen Dünnstglases und die Rückfläche des objektseitigen Dünnstglases komplett bedeckt. Etwaig überstehende Kunststofffolie wird bevorzugt abgeschnitten. Für den Fall, dass die wenigstens eine Kunststofffolie bereits den gleichen Krümmungsradius wie das hiermit zu verbindende Dünnstglas aufweist, weist die wenigstens eine Kunststofffolie bevorzugt den identischen Durchmesser wie das Dünnstglas auf. Bevorzugt wird die Kunststofffolie mittels eines Klebemittels mit wenigstens einem Dünnstglas verbunden. Das einsetzbare Klebemittel ist nachstehend beschrieben.

Durch die Verwendung des wenigstens einen Dünnstglases werden auch bei Verwendung einer Komponente B mit einem niedrigen Brechungsindex erfindungsgemäße Brillengläser mit wesentlich geringerer Mittendicke ermöglicht als dies mit einem polymeren Material gleichen Brechungsindexes oder teilweise sogar mit einem polymeren Material höheren Brechungsindexes möglich wäre.

Das wenigstens eine Dünnstglas nimmt durch die geringe mittlere Dicke keinen wesentlichen Einfluss auf die Mittendicke und die Randdicke des erfindungsgemäßen Brillenglases.

Durch die im erfindungsgemäßen Brillenglas verwirklichte drastische Reduzierung der Mittendicke wird auch dessen Randdicke reduziert. Dies ist insbesondere bei Minusgläsern in kosmetischer Hinsicht von Vorteil, da es für einen Betrachter unattraktiv erscheint, wenn das Brillenglas nicht vollständig in der Brillenfassung verschwindet.

Zur Herstellung eines erfindungsgemäßen Brillenglases umfassend die Komponenten A, B und C wird bei dieser Ausführungsform die Rückfläche des Dünnstglases R_{DA} der Komponente A mit der Vorderfläche V_{B} der Komponente B zusammengefügt. Die Rückfläche R_{B} der Komponente B wird, für den Fall, dass Komponente C ein Dünnstglas umfasst, mit der Vorderfläche des Dünnstglases V_{DC} der Komponente C zusammengefügt. Alternativ wird die Rückfläche R_{B} der Komponente B, für den Fall, dass Komponente C wenigstens eine Funktionsschicht F_{C} umfasst, mit dieser beschichtet. In Abwesenheit der Komponente B wird die Rückfläche des Dünnstglases R_{DA} der Komponente A mit der Vorderfläche des Dünnstglases V_{DC} der Komponente C zusammengefügt.
Das Zusammenfügen der einzelnen Komponenten des erfindungsgemäßen Brillenglases erfolgt beispielsweise mittels eines Klebemittels oder eines Bonding-Verfahrens. Bevorzugt erfolgt das Zusammenfügen der einzelnen Komponenten des erfindungsgemäßen Brillenglases mittels eines Klebemittels. Das Klebemittel kann hierbei beispielsweise als Primer oder Ausgleichsmaterial für die unterschiedliche Wärmeausdehnung der einzelnen Komponenten dienen. Weiterhin kann über die Auswahl des Klebemittels eine Angleichung eines gegebenenfalls vorhandenen Brechungsindexunterschieds Δn_{D} der einzelnen Komponenten zueinander erzielt werden. Vorzugsweise erfolgt hierbei nicht nur die Angleichung des Brechungsindex n_{D}, sondern auch die Angleichung der Abbe-Zahl, so dass die Änderung des Brechungsindex der einzelnen Komponenten über das sichtbare Spektrum hinweg gleich ist. Das im erfindungsgemäßen Brillenglas einsetzbare Klebemittel kann beispielsweise der DE 10 2012 210 185 A1, der WO 2009/056196 A1 oder der WO 2015/121341 A1 entnommen werden. Bevorzugt werden die einzelnen Komponenten des erfindungsgemäßen Brillenglases mittels eines Klebemittels basierend auf einer aminkatalysierten Thiolhärtung von Epoxidharzen analog WO 2015/121341 A1, insbesondere analog Anspruch 1 der WO 2015/121341 A1, bei einer Temperatur aus einem Bereich von 20°C bis 80°C, bevorzugt aus einem Bereich von 40°C bis 70°C und besonders bevorzugt aus einem Bereich von 45°C bis 65°C miteinander verbunden.

Bei einer Ausführungsform der Erfindung weisen die Komponenten A, B, und C, für den Fall, dass es sich bei Komponente C um ein Dünnstglas handelt, vor dem Zusammenfügen mittels eines Klebemittels die identischen Durchmesser auf.

Die Oberflächentopographie einer Funktionsschicht ist vorzugsweise der Oberflächentopographie der jeweils damit beschichteten Vorderfläche oder Rückfläche einer der Komponenten des erfindungsgemäßen Brillenglases angepasst. Unter angepasst ist hierbei zu verstehen, dass die beiden Oberflächentopographien im Wesentlichen gleich sind bzw. die Unterschiede so gering sind, dass sie mit einem der vorstehend aufgeführten Klebemittel verfüllt werden können.

Für den Fachmann ist es in diesem Zusammenhang weiterhin selbstverständlich, dass die jeweils an den Grenzflächen zwischen den Komponenten A und B bzw. B und C des erfindungsgemäßen Brillenglases optional vorhandene(n) Funktionsschicht(en) bei der Auswahl eines geeigneten Klebemittels mit berücksichtigt werden sollte(n).

Wird zur Herstellung eines die Komponenten A, B und C umfassenden Brillenglases als Komponente B ein Brillenglas-Halbfertigprodukt herangezogen, ist die optisch wirksame Zielfläche des Brillenglas-Halbfertigprodukts vorzugsweise stoffschlüssig und formschlüssig entweder mit der Rückfläche des Dünnstglases der Komponente A oder gegebenenfalls mit der Vorderfläche des Dünnstglases der Komponente C verbindbar. Mögliche Oberflächentopographien einer optisch wirksamen Zielfläche der Vorderfläche V_{B} bzw. der Rückfläche R_{B} der Komponente B sowie die hierzu jeweils passenden Oberflächentopographien der Dünnstgläser der Komponenten A und C, sofern Komponente C ein Dünnstglas umfasst, sind Tabelle 2 zu entnehmen. Bei dieser Ausführungsform kann die der optisch wirksamen Zielfläche des Brillenglas- Halbfertigprodukts gegenüberliegende Fläche zunächst ebenfalls in eine optisch wirksame Zielfläche überführt werden und die resultierende Komponente B kann mit dem Dünnstglas der Komponente A und optional der Komponente C, jeweils vorzugsweise stoffschlüssig und/oder formschlüssig, verbunden werden. Anstelle des Dünnstglases der Komponente C kann die Rückfläche der Komponente B auch mit einer Funktionsschicht Fc beschichtet werden. Vorzugsweise ist bei der Verwendung eines Brillenglas-Halbfertigprodukts die Vorderfläche V_{B} der Komponente B die optisch wirksame Zielfläche. Eine alternative Herstellungsmöglichkeit des erfindungsgemäßen Brillenglases mittels eines Brillenglas-Halbfertigprodukts umfasst die vorzugsweise stoffschlüssige und/oder formschlüssige Verbindung der optisch wirksamen Zielfläche des Brillenglas-Halbfertigprodukts mit einem der Dünnstgläser der Komponenten A oder C. Bevorzugt wird hierbei die optisch wirksame Vorderfläche V_{B} des Brillenglas-Halbfertigprodukts der Komponente B mit der Rückfläche R_{DA} des Dünnstglases der Komponente A stoffschlüssig und formschlüssig verbunden. Dieser Verbund erlaubt für die Bearbeitung der Rückfläche R_{B} eine geringe Mindestdicke der Komponente B ohne deren Stabilität zu beinträchtigen. Nach beendeter Rückflächenbearbeitung kann diese entweder mit der Vorderfläche des Dünnstglases V_{DC} der Komponente C vorzugsweise stoffschlüssig und/oder formschlüssig verbunden werden oder mit einer Funktionsschicht F_{C} beschichtet werden. Die vorzugsweise stoffschlüssige und/oder formschlüssige Verbindung kann mittels eines Klebmittels, mittels eines Bonding-Verfahrens oder mittels Ansprengen erfolgen. Bevorzugt ist die Verbindung der einzelnen Komponenten mittels eines Klebemittels. Geringfügige Unterschiede in der Oberflächentopographie und/oder eine unterschiedliche Wärmeausdehnung können mittels eines Klebemittels verfüllt bzw. ausgeglichen werden. Vorzugsweise erfolgt die Herstellung eines erfindungsgemäßen Brillenglases mit Hilfe eines Brillenglas-Halbfertigprodukts über das zuletzt vorgestellte Verfahren. Selbstredend können die einzelnen Komponenten des erfindungsgemäßen Brillenglases vor dem Zusammenfügen mit wenigstens einer der bereits detailliert beschriebenen Funktionsschichten belegt sein. Die separate Beschichtung bzw. separate Vorbereitung der einzelnen Komponenten hat den Vorteil, dass die Prozessbedingungen auf die jeweilige Komponente optimal zugeschnitten werden können. Umfasst das erfindungsgemäße Brillenglas weitere Komponenten, so gelten vorstehende Ausführungen in Bezug auf die Komponenten A, B und C entsprechend.

In nachstehender Tabelle 2 wird beispielhaft ein Überblick der möglichen Oberflächentopographien der Vorderflächen bzw. der Rückflächen der Komponenten A, B und C des erfindungsgemäßen Brillenglases gegeben, sofern Komponente C ein Dünnstglas und Komponente B ein fertiges Brillenglas umfasst. In Tabelle 2 wird nicht zwischen Vorderfläche und Rückfläche des jeweiligen Dünnstglases der Komponente A bzw. C unterschieden, da die durch einen gegebenenfalls vorausgegangenen Umformungsprozess hervorgerufenen Unterschiede in der Oberflächentopographie vorzugweise vernachlässigbar sind. Weiterhin werden bei dem beispielhaften Überblick von Oberflächentopographien optional vorhandene Funktionsschichten nicht separat erwähnt, da die einzelnen Funktionsschichten vorzugsweise an die Oberflächentopographie der jeweils damit beschichteten Komponente angepasst und somit vorzugsweise in diesem Zusammenhang ebenfalls vernachlässigbar sind.

**Tabelle 2: Mögliche Oberflächentopographien der Komponenten A, B und C**

| Komponente A | Komponente B, Vorderfläche V_{B} | Komponente B, Rückfläche R_{B} | Komponente C |
|---|---|---|---|
| sphärisch¹⁾ | sphärisch | sphärisch | sphärisch |
| sphärisch | sphärisch | plan | plan |
| plan | plan | sphärisch | sphärisch |
| plan | plan | plan | plan |
| asphärisch¹⁾ | asphärisch | asphärisch | asphärisch |
| asphärisch | asphärisch | plan | plan |
| plan | plan | asphärisch | asphärisch |
| sphärisch | sphärisch | asphärisch | asphärisch |
| asphärisch | asphärisch | sphärisch | sphärisch |
| sphärisch | sphärisch | torisch¹⁾ | torisch |
| torisch | torisch | sphärisch | sphärisch |
| torisch | torisch | torisch | torisch |
| asphärisch | asphärisch | torisch | torisch |
| torisch | torisch | asphärisch | asphärisch |
| torisch | torisch | plan | plan |
| plan | plan | torisch | torisch |
| sphärisch | sphärisch | atorisch¹⁾ | atorisch |
| atorisch | atorisch | sphärisch | sphärisch |
| atorisch | atorisch | atorisch | atorisch |
| asphärisch | asphärisch | atorisch | atorisch |
| atorisch | atorisch | asphärisch | asphärisch |
| atorisch | atorisch | plan | plan |
| plan | plan | atorisch | atorisch |
| torisch | torisch | atorisch | atorisch |
| atorisch | atorisch | torisch | torisch |

| | | | |
|---|---|---|---|
| ¹⁾ Eine sphärische, asphärische, torische oder atorische Oberflächentopographie kann jeweils konvex oder konkav ausgestaltet sein. Beim Zusammenfügen der einzelnen Komponenten des erfindungsgemäßen Brillenglases werden vorzugsweise jeweils ausschließlich konkave oder jeweils ausschließlich konvexe Komponenten verwendet. | | | |

Bei einer Ausführungsform der Erfindung kann, wie aus oben stehender Tabelle 2 ersichtlich, für den Fall, dass Komponente C ein Dünnstglas und Komponente B ein fertiges Brillenglas umfasst, die Oberflächentopographie an der jeweiligen Grenzfläche der Komponenten A zu B bzw. B zu C passend zueinander sein, so dass die einzelnen Komponenten des erfindungsgemäßen Brillenglases vorzugsweise stoffschlüssig und/oder formschlüssig miteinander verbindbar sind. Zueinander passend meint hier, dass die jeweiligen Grenzflächen passgenau zusammengefügt oder dass geringfügige Unterschiede in der Oberflächentopographie mittels eines Klebemittels verfüllt werden können. Die Oberflächentopographie des Dünnstglases der Komponenten A und C kann gleich oder verschieden voneinander sein.

Bei einer Ausführungsform der Erfindung können die Vorderflächen und die Rückflächen der Komponenten A, B und C des erfindungsgemäßen Brillenglases jeweils eine identische Oberflächentopographie aufweisen, wie beispielhaft in Tabelle 2 aufgeführt. Sind die Vorderflächen und die Rückflächen der Komponenten A, B und C beispielsweise jeweils sphärisch geformt, können diese jeweils identische Krümmungsradien und Durchmesser aufweisen, so dass die Komponenten A und B und die Komponenten B und C jeweils stoffschlüssig und formschlüssig, beispielsweise mittels eines Klebemittels, eines Bonding-Verfahrens oder durch Ansprengen, zusammengefügt werden können. Bevorzugt ist das Zusammenfügen der einzelnen Komponenten des erfindungsgemäßen Brillenglases mittels eines Klebemittels, besonders bevorzugt mittels eines Klebemittels basierend auf einer aminkatalysierten Thiolhärtung von Epoxidharzen gemäß WO 2015/121341 A1. Sind die Vorderflächen und die Rückflächen der Komponenten A, B und C jeweils sphärisch geformt, weisen aber an der Grenzfläche zwischen den Komponenten A und B und/oder an der Grenzfläche zwischen den Komponenten B und C keine identischen Krümmungsradien auf, so werden die durch die Krümmungsunterschiede beim Zusammenfügen der einzelnen Komponenten entstehenden Hohlräume vorzugsweise mittels eines Klebemittels verfüllt. Auch zum Verfüllen von Hohlräumen wird bevorzugt ein Klebemittel basierend auf einer aminkatalysierten Thiolhärtung von Epoxidharzen gemäß WO 2015/121341 A1 eingesetzt. Bevorzugt weichen nicht identische Krümmungsradien der einzelnen Komponenten weniger als 1 mm, weiter bevorzugt in einem Bereich von 0,03 mm bis ≤ 0,8 mm, besonders bevorzugt in einem Bereich von 0,04 mm bis ≤ 0,7 mm und ganz besonders bevorzugt in einem Bereich von 0,05 mm bis ≤ 0,6 mm voneinander ab. Geringfügige Abweichungen der Krümmungsradien können dahingehend ausgenutzt werden, dass gegebenenfalls auftretende Lufteinschlüsse im Klebemittel während des Zusammenfügens durch einfaches Anpressen des Dünnstglases der Komponente A und/oder C in Richtung Zylinderrandfläche des Brillenglas-Halbfertigprodukts bzw. des fertigen Brillenglases der Komponente B entfernt werden können. Sind die Grenzflächen der Komponenten A, B und C jeweils plan geformt, können diese ebenfalls beispielsweise mittels eines Klebemittels oder eines Bonding-Verfahrens stoffschlüssig und formschlüssig zusammengefügt werden.

Bei einer weiteren Ausführungsform der Erfindung können die erfindungsgemäßen Brillengläser entweder keine oder wenigstens eine dioptrische Wirkung aufweisen, welche im fertigen Brillenglas, gegebenenfalls unter Berücksichtigung des Dünnstglases der Komponente A bzw. der Dünnstgläser der Komponenten A und C, realisiert ist. Erfindungsgemäße Brillengläser mit vorstehend beschriebenen Oberflächentopographien und gleichzeitig wenigstens einer dioptrischen Wirkung, d.h. als Einstärken-Brillenglas oder als Mehrstärken-Brillenglas können beispielsweise auch mittels einer Komponente B, welche eine berechnete ortsabhängige Brechungsindexverteilung aufweist, realisiert werden.

Bei einer Ausführungsform der Erfindung können wenigstens die Komponenten A, B und C, sofern es sich bei der Komponente C um ein Dünnstglas handelt, des erfindungsgemäßen Brillenglases mittels eines Bonding-Verfahrens zusammengefügt werden. Das Bonding-Verfahren kann alternativ oder zusätzlich zu einem Klebemittel oder zum Ansprengen zum Zusammenfügen der einzelnen Komponenten des erfindungsgemäßen Brillenglases herangezogen werden. Das Bonding-Verfahren kann sowohl in Zusammenhang mit Brillenglas-Halbfertigprodukten und fertigen Brillengläsern als Komponente B zum Einsatz kommen. Alternativ können auch mehrere Verfahren zum Zusammenfügen eines erfindungsgemäßen Brillenglases zum Einsatz kommen. Beispielsweise können die Komponenten A und B mittels eines Bonding-Verfahrens und Komponenten B und C mittels eines Klebemittels zusammengefügt werden. Beim Bonding-Verfahren wird wenigstens eine Seite des fertigen Brillenglases bzw. die optisch wirksame Zielfläche des Brillenglas-Halbfertigprodukts zur Formgebung des Dünnstglases, welches mit eben dieser formgebenden Fläche verbunden werden soll, herangezogen. Hierzu wird das Dünnstglas der Komponente A bzw. das Dünnstglas der Komponente C bevorzugt bis zur Transformationstemperatur T_{G} des jeweiligen Dünnstglases, bevorzugt unter einer Schutzgasatmosphäre, erwärmt und mit der jeweils zu verbindenden Vorderfläche bzw. Rückfläche der Komponente B in Kontakt gebracht, beispielsweise durch Hineindrücken der Vorderfläche oder der Rückfläche der Komponente B in das erwärmte Dünnstglas. Komponente B dient hier zum einen als Formschale zur Umformung des Dünnstglases, zum anderen entfällt beim Bonding-Verfahren der Einsatz eines Klebemittels. Beim Einsatz des Bonding-Verfahrens ist es für den Fachmann selbstredend, dass die Prozessbedingungen für Brillenglas-Halbfertigprodukte oder fertigen Brillenglases der Komponente B basierend auf mineralischem Glas und Brillenglas-Halbfertigprodukte oder fertigen Brillenglases der Komponente B basierend auf organischen Materialien entsprechend angepasst werden müssen. Brillenglas-Halbfertigprodukte oder fertigen Brillenglases der Komponente B basierend auf mineralischem Glas können eine höhere Transformationstemperatur T_{G} als das zu bondende Dünnstglas der Komponenten A und optional C aufweisen, so dass hier beim Bonding-Verfahren weniger auf die Temperaturbeständigkeit der wenigstens einen optisch wirksamen Zielfläche der Komponente B selbst als auf eine auf der Komponente B aufgebrachte optional wenigstens eine Funktionsschicht geachtet werden muss und somit die Verfahrensbedingungen entsprechend angepasst werden müssen. Brillenglas-Halbfertigprodukte oder fertigen Brillenglases der Komponente B basierend auf organischen Materialien weisen in der Regel eine deutlich niedrigere Transformationstemperatur T_{G} als das zu bondende Dünnstglas der Komponente A und optional der Komponente C auf. In diesem Fall muss das Bonding-Verfahren sowohl an die Temperaturbeständigkeit der Komponente B als auch an die Temperaturbeständigkeit einer optional auf der Komponente B vorhandenen Beschichtung angepasst werden. Dies kann beispielsweise dadurch erreicht werden, dass die Temperaturbelastung der Komponente B möglichst gering gehalten wird, indem Komponente B möglichst kurz, bevorzugt weniger als 5 Sekunden, besonders bevorzugt weniger als 2 Sekunden, einem zur Erwärmung des Dünnstglases dienenden Bereich, beispielweise einem Ofen, ausgesetzt ist. Diese kurzzeitige Temperaturbelastung der Komponente B bewirkt keine Veränderung der optisch wirksamen Zielfläche, da die Wärmekapazität des Dünnstglases in Anbetracht dessen geringer Masse gering gegenüber der Masse der Komponente B ist. Temperaturempfindliche Funktionsschichten der Komponente B können beispielsweise mit einer temperaturbeständigeren Schutzschicht geschützt werden. Hierbei kann es sich beispielsweise um eine Beschichtungszusammensetzung, wie z.B. in EP 2 578 649 A1, insbesondere in EP 2 578 649 A1, Anspruch 1, offenbart, oder um eine Metalloxid-, Metallhydroxid- und/oder Metalloxidhydratschicht, handeln. Die Schutzschicht kann weiterhin als Primer zum Ausgleich der Ausdehnungsunterschiede dienen.

Vorstehende Ausführungen zum Zusammenfügen der Komponenten A, B und C, mit einem fertigen Brillenglas als Komponente B, können auf die Gegenwart weiterer Komponenten im erfindungsgemäßen Brillenglas entsprechend übertragen werden.

Bei einer weiteren Ausführungsform können die Dünnstgläser der Komponenten A und C mit einem fertigen Brillenglas durch einfaches Annähern angesprengt werden. Auf diese Weise kann ein stabiler Verbund ohne Klebemittel oder vorhergehende Erwärmung erzielt werden. Voraussetzung hierfür ist, dass die Dünnstgläser der Komponenten A und C sowie das fertige Brillenglas der Komponente B einen identischen Krümmungsradius aufweisen. Bei einem identischen Krümmungsradius werden in diesem Zusammenhang Abweichungen im Submilllimeterbereich toleriert.

Bei einer Ausfiihrungsform der Erfindung kann das Brillenglas-Halbfertigprodukt oder das fertige Brillenglas der Komponente B eingefärbt oder nicht eingefärbt vorliegen. Weiterhin kann das Brillenglas-Halbfertigprodukt oder das fertige Brillenglas der Komponente B beispielsweise eine polarisierende Folie umfassen.

Bei einer bevorzugten Ausfiihrungsform der Erfindung ist das Brillenglas-Halbfertigprodukt oder das fertige Brillenglas der Komponente B nicht eingefärbt.

Bei einer weiteren bevorzugten Ausfiihrungsform umfasst das Brillenglas-Halbfertigprodukt der Komponente B auf der optisch wirksamen Zielfläche wenigstens eine Funktionsschicht und das fertige Brillenglas der Komponente B umfasst auf der Vorderfläche V_{B} wenigstens eine Funktionsschicht F_{VB} und auf der Rückfläche R_{B} wenigstens eine Funktionsschicht F_{RB}. In Abhängigkeit von der optisch wirksamen Zielfläche des Brillenglas-Halbfertigprodukts kann es sich bei der jeweiligen Funktionsschicht um die nachstehend für das fertige Brillenglas angegebenen Schichten handeln. Als wenigstens eine Funktionsschicht F_{VB} können diejenigen Funktionsschichten F_{RA}, welche auf der Rückfläche R_{DA} des Dünnstglases der Komponente A eingesetzt werden können, verwendet werden, d.h. die Funktionsschicht F_{VB} kann aus der Gruppe, bestehend aus farbgebender Schicht, photochromer Schicht, polarisierender Schicht und Verspiegelungsschicht, ausgewählt werden. Die Funktionsschichten F_{RA} wurden bereits vorstehend detailliert beschrieben. Auch in Bezug auf die bevorzugte Schichtenfolge zwischen den Komponenten A und B des erfindungsgemäßen Brillenglases gilt das bereits oben stehend gesagte. Ist die Vorderfläche V_{B} des Brillenglas-Halbfertigprodukts bzw. des fertigen Brillenglases mit wenigstens einer Funktionsschicht F_{VB} beschichtet, ist es eine mögliche Ausführungsform, dass die Rückfläche R_{DA} des Dünnstglases der Komponente A keine Funktionsschicht F_{RA} aufweist oder die Vorderfläche V_{B} und die Rückfläche R_{DA} können jeweils einen Teil der im erfindungsgemäßen Brillenglas zwischen den Komponenten A und B vorliegenden Funktionsschichten aufweisen. Basiert das Brillenglas-Halbfertigprodukt bzw. das fertige Brillenglas der Komponente B auf einem organischen Material, birgt eine Beschichtung der Rückfläche R_{DA} des Dünnstglases der Komponente A insbesondere den Vorteil, dass die Beschichtungsbedingungen für das Dünnstglas optimiert werden können, ohne dass das temperaturempfindlichere organische Material berücksichtigt werden muss. Die Beschichtung der Vorderfläche V_{B} des Brillenglas-Halbfertigprodukts oder des fertigen Brillenglases der Komponente B mit wenigstens einer Funktionsschicht F_{VB} hat dagegen den Vorteil, dass herkömmliche Standard-Beschichtungsprozesse für Brillengläser basierend auf polymeren Materialien in herkömmlichen Standard-Beschichtungsanlagen eingesetzt werden können, ohne dass spezielle Vorkehrungen für das bruchempfindlichere Dünnstglas der Komponente A getroffen werden müssen. Als wenigstens eine Funktionsschicht F_{RB} der Rückfläche R_{B} des fertigen Brillenglases der Komponente B kann ebenso wie als Funktionsschicht Fvc zur Beschichtung der Vorderfläche V_{DC} des Dünnstglases der Komponente C eine farbgebende Schicht eingesetzt werden. Auch bei der zwischen den Komponenten B und C im erfindungsgemäßen Brillenglas vorliegenden wenigstens einen Funktionsschicht kann entweder die Rückfläche R_{B} des fertigen Brillenglases der Komponente B oder die Vorderfläche V_{DC} des Dünnstglases der Komponente C beschichtet werden. Die vorstehend im Zusammenhang mit der Beschichtung zwischen den Komponente A und C des erfindungsgemäßen Brillenglases angestellten Überlegungen finden auch hier Anwendung für die Auswahl der zu beschichtenden Komponente. Sofern das erfindungsgemäße Brillenglas kein Dünnstglas als Komponente C umfasst, kann die Rückfläche R_{B} des fertigen Brillenglases alternativ auch mit wenigstens einer Funktionsschicht Fc als Komponente C beschichtet werden. Die Funktionsschicht F_{C} der Komponente C kann beispielsweise aus der Gruppe bestehend aus wenigstens einer Zusammensetzung für die Herstellung einer Beschichtung mit hoher Haftfestigkeit und hoher Kratzbeständigkeit, wie beispielsweise in EP 2 578 649 A1, insbesondere in EP 2 578 649 A1, Anspruch 1, beschrieben, wenigstens einer Entspiegelungsschicht, wenigstens einer Antibeschlagsschicht, wenigstens einer Clean-Coat-Schicht und wenigstens einer elektrisch leitfähige oder halbleitende Schicht, ausgewählt sein. Ausgehend von der Rückfläche R_{B} des fertigen Brillenglases der Komponente B ist in Anwesenheit mehrerer Schichten die Beschichtungsreihenfolge in Richtung Auge wie folgt:
a) optional wenigstens eine elektrisch leitfähige oder halbleitende Schicht,
b) wenigstens eine Entspiegelungsschicht,
c) wenigstens eine Antibeschlagsschicht oder wenigstens eine Clean-Coat-Schicht.
Die optional als Funktionsschicht Fc vorhandene elektrisch leitfähige oder halbleitende Schicht kann ein Bestandteil der Entspiegelungsschicht sein.

Bei einer bevorzugten Ausführungsform der Erfindung wird bei der Herstellung eines erfindungsgemäßen Brillenglases umfassend wenigstens die Komponenten A, B und C unter Verwendung eines Brillenglas-Halbfertigprodukts oder eines fertigen Brillenglases als Komponente B dieses auf der Vorderfläche V_{B} und/oder auf der Rückfläche R_{B} beschichtet. Diese Komponente B wird anschließend mit einem auf der Rückfläche R_{DA} nicht beschichteten Dünnstglas der Komponente A und optional mit einem auf der Vorderfläche V_{DA} nicht beschichteten Dünnstglas der Komponente C zusammengefügt. Alternativ kann die Rückfläche R_{B} des Brillenglas-Halbfertigprodukts, wenn optisch wirksam, oder die Rückfläche R_{B} des fertigen Brillenglases mit wenigstens einer Funktionsschicht F_{C} beschichtet werden. Als Funktionsschicht F_{C} kommen hierbei bevorzugt die vorstehend beschriebenen Schichten in der dort angegebenen Reihenfolge in Frage. Handelt es sich bei den Komponenten A und C des erfindungsgemäßen Brillenglases jeweils um ein Dünnstglas, so kann die Vorderfläche V_{DA} des Dünnstglases der Komponente A sowie die Rückfläche R_{DC} des Dünnstglases der Komponente C jeweils mit wenigstens einer Funktionsschicht F_{VA} bzw. F_{RC} belegt werden. Die Funktionsschicht F_{VA} bzw. die Funktionsschicht F_{RC} kann jeweils aus der Gruppe bestehend aus wenigstens einer Entspiegelungsschicht, wenigstens einer Antibeschlagsschicht, wenigstens einer elektrisch leitfähigen oder halbleitenden Schicht und wenigstens einer Clean-Coat-Schicht sein. Ausgehend von der Vorderfläche V_{DA} des Dünnstglases der Komponente A in Richtung Objekt bzw. ausgehend von der Rückfläche R_{DC} des Dünnstglases der Komponente C in Richtung Auge ist die Beschichtungsreihenfolge bevorzugt jeweils wie folgt:
a) optional wenigstens eine elektrisch leitfähige oder halbleitende Schicht,
b) wenigstens eine Entspiegelungsschicht,
c) wenigstens eine Antibeschlagsschicht oder wenigstens eine Clean-Coat-Schicht.
Die optional vorhandene elektrisch leitfähige oder halbleitende Schicht kann als Bestandteil der Entspiegelungsschicht vorliegen. Die wenigstens eine Funktionsschicht F_{VA} und die wenigstens eine Funktionsschicht F_{RC} können jeweils identisch sein, müssen dies aber nicht, d.h. die Vorderfläche V_{DA} des Dünnstglases der Komponente A und die Rückfläche R_{DC} des Dünnstglases der Komponente C können mit unterschiedlichen Funktionsschichten belegt sein. Bevorzugt ist die wenigstens eine Funktionsschicht F_{VA} der Vorderfläche V_{DA} des Dünnstglases der Komponente A und die wenigstens eine Funktionsschicht F_{RC} der Rückfläche R_{DC} des Dünnstglases der Komponente C sowie bei jeweiligem Vorliegen mehrerer Funktionsschichten deren jeweilige Reihenfolge ausgehend von der jeweiligen Oberfläche des Dünnstglases identisch. Alternativ kann die Vorderfläche V_{DA} des Dünnstglases der Komponente A und/oder die Rückfläche R_{DC} des Dünnstglases der Komponente C mit wenigstens einer Entspiegelungsschicht versehen sein, wobei die Entspiegelungsschichten identisch oder verschieden voneinander aufgebaut sein kann.

Die Verwendung von wenigstens einem Dünnstglas mit der nachstehend genannten mittleren Dicke bietet im Hinblick auf das Formranden den Vorteil, dass sich das wenigstens eine Dünnstglas nicht von der Komponente B separiert und auch keine Abplatzungen oder Einrisse des Dünnstglases beobachtet werden.

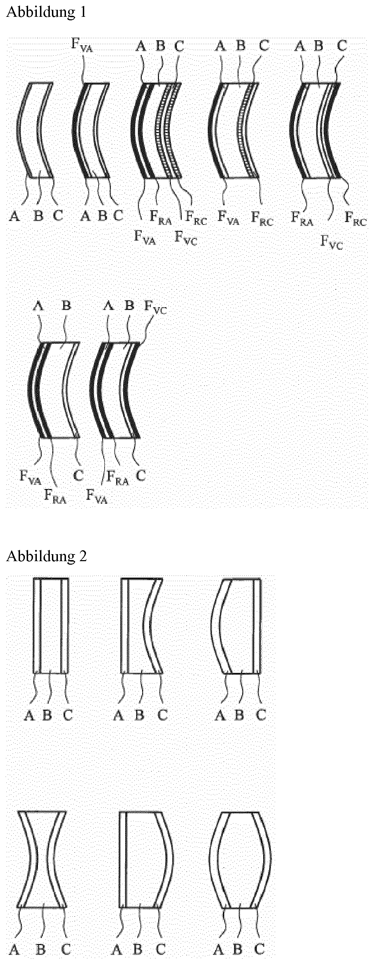

Abbildung 1 zeigt mögliche Ausführungsformen von Beschichtungen des erfindungsgemäßen Brillenglases.

Abbildung 2 zeigt mögliche Oberflächentopographien des erfindungsgemäßen Brillenglases.

Im Folgenden wird die Erfindung durch einige Beispiele näher erläutert, welche die Erfindung jedoch nicht beschränken.

### I Herstellung der erfindungsgemäßen Brillengläser

### Beispiele 1 bis 11

Ein Brillenglas-Halbfertigprodukt basierend auf Polyallyldiglycolcarbonat (CR 39, Firma PPG Industries, Inc.) mit einer Vorderflächenkrümmung von 123,50mm wurde mittels abrasiver Bearbeitung auf der Rückfläche R_{B} des Brillenglas-Halbfertigproduktss auf eine optische Stärke von -2,00dpt eingestellt. Auf die Vorderfläche wurden mittig 500µL des Klebemittels gemäß Beispiel 2 der WO 2015/121341 A1 aufgebracht und anschließend das mittels einer Keramikform umgeformte Dünnstglas (Dünnstglas vor Umformung: D 263® T eco, Firma Schott AG) mit einem Krümmungsradius von 123,50mm mit Hilfe einer Zentriermaschine aufgedrückt aufgedrückt, so dass sich der Klebstoff gleichmäßig zwischen der konvexen Vorderfläche V_{B} des Brillenglases und der konkaven Rückfläche R_{B} des Dünnstglases verteilte. Zum Aushärten des Klebemittels wurde das die Komponenten A und B umfassende Brillenglas bei 25°C für 40sec mit einer LED-UV-Quelle von Hönle ausgehärtet.

| Beispiel | Mittendicke des Brillenglases [mm] | Mittlere Dicke Dünnstglas [µm] |
|---|---|---|
| 1 | 2,39 | 210 |
| 2 | 2,22 | 100 |
| 3 | 1,84 | 100 |
| 4 | 1,66 | 100 |
| 5 | 1,58 | 100 |
| 6 | 1,13 | 100 |
| 7 | 1,00 | 100 |
| 8 | 0,70 | 100 |
| 9 | 0,59 | 100 |
| 10 | 0,47 | 100 |
| 11 | 0,41 | 100 |

### Beispiele 12 bis 14

Ein Brillenglas-Halbfertigprodukt basierend auf Polyallyldiglycolcarbonat (CR 39, Firma PPG Industries, Inc.) mit einer Vorderflächenkrümmung von 123,50mm wurde mittels abrasiver Bearbeitung auf der Rückfläche R_{B} des Brillenglas-Halbfertigprodukts auf eine optische Stärke von -2,00dpt eingestellt. Auf der Rückfläche R_{B} wurde über eine Schleuderbeschichtung eine Hartlackschicht gemäß Beispiel 2 der EP 2 578 649 A1 aufgebracht, die bei 120°C für drei Stunden ausgehärtet wurde. Auf die Vorderfläche wurden mittig 500µL des Klebemittels gemäß Beispiel 2 der WO 2015/121341 A1 aufgebracht und anschließend das mittels einer Keramikform umgeformte Dünnstglas (Dünnstglas vor Umformung: D 263® T eco, Firma Schott AG) mit einem Krümmungsradius von 123,50mm mit Hilfe einer Zentriermaschine aufgedrückt aufgedrückt, so dass sich der Klebstoff gleichmäßig zwischen der konvexen Vorderfläche V_{B} des Brillenglases und der konkaven Rückfläche R_{B} des Dünnstglases verteilte.

Zum Aushärten des Klebemittels wurde das die Komponenten A und B umfassende Brillenglas bei 25°C für 40sec mit einer LED-UV-Quelle von Hönle ausgehärtet.

| Beispiel | Mittendicke des Brillenglases [mm] | Mittlere Dicke Dünnstglas [µm] |
|---|---|---|
| 12 | 1,73 | 210 |
| 13 | 1,54 | 210 |
| 14 | 1,28 | 210 |

### Beispiele 15 bis 16

Ein Brillenglas-Halbfertigprodukt basierend auf Polyallyldiglycolcarbonat (CR 39, Firma PPG Industries, Inc.) mit einer Vorderflächenkrümmung von 123,50mm wurde mittels abrasiver Bearbeitung auf der Rückfläche R_{B} des Brillenglas-Halbfertiprodukts auf eine optische Stärke von -2,00dpt eingestellt. Auf das Brillenglas wird im Anschluss mit einem Tauchverfahren eine Hartlackschicht gemäß Beispiel 2 der EP 2 578 649 A1 aufgebracht, die bei 120°C für drei Stunden ausgehärtet wurde. Auf die Rückfläche wurde eine Entspiegelungsschicht (DuraVision Platinum, Firma ZEISS) sowie anschließend mit der Clean-Coat-Schicht (AFP 3000+, Firma Cotec GmbH), jeweils mittels eines PVD-Verfahrens, bedampft. Auf die Vorderfläche wurden mittig 500µL des Klebemittels gemäß Beispiel 2 der WO 2015/121341 A1 aufgebracht und anschließend das mittels einer Keramikform umgeformte Dünnstglas (Dünnstglas vor Umformung: D 263® T eco, Firma Schott AG) mit einem Krümmungsradius von 123,50mm mit Hilfe einer Zentriermaschine aufgedrückt aufgedrückt, so dass sich der Klebstoff gleichmäßig zwischen der konvexen Vorderfläche V_{B} des Brillenglases und der konkaven Rückfläche R_{B} des Dünnstglases verteilte. Zum Aushärten des Klebemittels wurde das die Komponenten A und B umfassende Brillenglas bei 25°C für 40sec mit einer LED-UV-Quelle von Hönle ausgehärtet. Auf die Vorderfläche wurde eine Entspiegelungsschicht (DuraVision Platinum, Firma ZEISS) sowie anschließend mit der Clean-Coat-Schicht (AFP 3000+, Firma Cotec GmbH), jeweils mittels eines PVD-Verfahrens, bedampft.

| Beispiel | Mittendicke des Brillenglases [mm] | Mittlere Dicke Dünnstglas [µm] |
|---|---|---|
| 15 | 1,97 | 210 |
| 16 | 1,65 | 210 |

### Beispiele 17 und 18

Ein Brillenglas-Halbfertigprodukt basierend auf Polyallyldiglycolcarbonat (CR 39, Firma PPG Industries, Inc.) mit einer Vorderflächenkrümmung von 123,50mm wurde mittels abrasiver Bearbeitung auf der Rückfläche R_{B} des Brillenglas-Halbfertigprodukts auf eine optische Stärke von -2,00dpt eingestellt. Auf das Brillenglas wird im Anschluss mit einem Tauchverfahren eine Hartlackschicht gemäß Beispiel 2 der EP 2 578 649 A1 aufgebracht, die bei 120°C für drei Stunden ausgehärtet wurde. Auf die Rückfläche wurde eine Entspiegelungsschicht (DuraVision Platinum, Firma ZEISS) sowie anschließend mit der Clean-Coat-Schicht (AFP 3000+, Firma Cotec GmbH), jeweils mittels eines PVD-Verfahrens, bedampft. Auf die Vorderfläche wurden mittig 500µL des Klebemittels gemäß Beispiel 2 der WO 2015/121341 A1 aufgebracht und anschließend das mittels einer Keramikform umgeformte Dünnstglas (Dünnstglas vor Umformung: D 263® T eco, Firma Schott AG) mit einem Krümmungsradius von 123,50mm mit Hilfe einer Zentriermaschine aufgedrückt aufgedrückt, so dass sich der Klebstoff gleichmäßig zwischen der konvexen Vorderfläche V_{B} des Brillenglases und der konkaven Rückfläche R_{B} des Dünnstglases verteilte. Zum Aushärten des Klebemittels wurde das die Komponenten A und B umfassende Brillenglas bei 25°C für 40sec mit einer LED-UV-Quelle von Hönle ausgehärtet.

| Beispiel | Mittendicke des Brillenglases [mm] | Mittlere Dicke Dünnstglas [µm] |
|---|---|---|
| 17 | 2,02 | 210 |
| 18 | 1,66 | 210 |

### Vergleichsbeispiele 1 bis 3

Ein Brillenglas-Halbfertigprodukt basierend auf Polyallyldiglycolcarbonat (CR 39, Firma PPG Industries, Inc.) mit einer Vorderflächenkrümmung von 123,50mm wurde mittels abrasiver Bearbeitung auf der Rückfläche R_{B} des Brillenglas-Halbfertigprodukts auf eine optische Stärke von -2,00dpt eingestellt. Auf das Brillenglas wird im Anschluss mit einem Tauchverfahren eine Hartlackschicht gemäß Beispiel 2 der EP 2 578 649 A1 aufgebracht, die bei 120°C für drei Stunden ausgehärtet wurde. Auf die Vorder- und Rückfläche wurde eine Entspiegelungsschicht (DuraVision Platinum, Firma ZEISS) sowie anschließend mit der Clean-Coat-Schicht (AFP 3000+, Firma Cotec GmbH), jeweils mittels eines PVD-Verfahrens, bedampft.

| Vergleichsbeispiel | Mittendicke des Brillenglases [mm] |
|---|---|
| 1 | 1,55 |
| 2 | 1,64 |

### II Charakterisierung der erfindungsgemäßen Brillengläser sowie der Brillengläser der Vergleichsbeispiele

IIa Kugelfalltest gemäß 21CFR801.410
Die erfindungsgemäßen Brillengläser der Beispiele 1 bis 18 bestanden den Kugelfalltest ohne Probleme. Sie zeigten keinerlei Anzeichen für eine Beschädigung der Oberfläche. Die Brillengläser der Vergleichsbeispiele dagegen bestanden den Kugelfalltest zwar, zeigten aber jeweils einen Stern als Fehlerbild.

IIb Reduktion des Gewichts der erfindungsgemäßen Brillengläser
Neben der Dicke eines Glases spielt für den Nutzer auch das Gewicht eine entscheidende Rolle. Insbesondere der Tragekomfort wird von einem möglichst geringen Gewicht befördert. Es ist zu beachten, das Glas aus D 263® T eco, Firma Schott AG, eine Dichte von 2,51g/cm³ aufweist und damit deutlich schwerer als Polymersubstrate basierend auf Polyallyldiglycolcarbonat (Dichte = 1,32g/cm³) ist. Das Polymersubstrat wiegt damit nur 52,6% des Mineralglases. Um dieses zusätzliche Gewicht zu kompensieren ist es entscheidend, die Mittendicke des Polymersubstrates zu reduzieren.

Für ein physische planes Dünnstglas aus D 263® T eco, Firma Schott AG, mit einem Durchmesser von 70mm und einer Dicke von 100µm ergibt sich daraus ein Gewicht von 965,5mg, bei 210µm ergeben sich 2027,5mg. Bei einer Schichtdicke von 100µm für das Klebemittel (Dichte 1,32g/cm³) ergibt sich für die Kombination von Dünnstglas und Klebemittel ein Gewicht von 1342,5mg (Dünnstglas 100µm dick) oder 2174,9mg (Dünnstglas 210µm dick). Entsprechend ergibt sich ein Einsparpotential im Polymer für verschiedene Dickenreduktionen nach der folgenden Tabelle:

| Polymersubstrat: Polyallyldiglycolcarbonat | | Brillenglas umfassend die Komponenten A (Dünnstglas), Klebemittel, B (Polyallyldiglycolcarbonat) | |
|---|---|---|---|
| Dickenreduktion [mm] | Gewichtsersparnis [mg] | Differenz mg Gesamtgewicht Hybrid Kalotte [100µm] + Kleber [100µm] | Differenz mg Gesamtgewicht Hybrid Kalotte [210µm] + Kleber [100µm] |
| 0,1 | 507,74 | 834,7 | 1667,2 |
| 0,3 | 1523,21 | -180,7 | 651,7 |
| 0,4 | 2030,95 | -688,5 | 144,0 |
| 0,5 | 2538,69 | -1196,2 | -363,7 |
| 0,6 | 3046,43 | -1704,0 | -871,5 |
| 0,7 | 3554,17 | -2211,7 | -1379,2 |
| 0,8 | 4061,90 | -2719,4 | -1887,0 |
| 0,9 | 4569,64 | -3227,2 | -2394,7 |

Aus diesen Berechnungen folgt, dass ein um 0,3mm (100µm Dünnstglas) oder 0,5mm (210µm Dünnstglas) dünneres Polymersubstrat zu einem in Summe leichteren fertigen Brillenglas führt. Bei derzeitigen Mindestdicken im Bereich um 2mm für Polyallyldiglycolcarbonat-basierte Brillengläser bieten die Hybridgläser mit dem Bestehen des FDA Kugelfalltests bis herunter auf 0,41mm Mittendicke deutliches Potential zur Verringerung des Gewichts eines Brillenglases. Die Beispiele 5 bis 11 und 14 erfüllen diese Bedingung.

## Patentansprüche

1. Brillenglas umfassend wenigstens ein Dünnstglas, **dadurch gekennzeichnet, dass** das Brillenglas nach Aufprall einer 15,87 mm großen und 16,36 g schweren Stahlkugel aus einer Höhe von 1,27 m keine Beschädigung aufweist.

2. Brillenglas nach Anspruch 1, **dadurch gekennzeichnet, dass** das Brillenglas eine Mittendicke aus einem Bereich von 0,34 mm bis 2,22 mm aufweist.

3. Brillenglas nach einem der vorstehenden Ansprüche, **dadurch gekennzeichnet, dass** das Brillenglas ausgehend von der objektseitigen Vorderfläche des Brillenglases zur gegenüberliegenden Rückfläche des Brillenglases, wenigstens
a) eine Komponente A umfassend ein Dünnstglas,
b) eine Komponente B umfassend wenigstens ein polymeres Material und/oder wenigstens ein mineralisches Glas,
c) eine Komponente C umfassend wenigstens eine Funktionsschicht F_{C} und/oder ein Dünnstglas umfasst.

4. Brillenglas nach einem der vorstehenden Ansprüche, wobei das Dünnstglas der Komponente A bzw. der Komponente C jeweils eine mittlere Dicke aus einem Bereich von 10 µm bis 250 µm aufweist.

5. Brillenglas nach einem der vorstehenden Ansprüche, wobei das Dünnstglas der Komponente A bzw. der Komponente C jeweils keine Farbmittel umfasst oder jeweils keine photochromen Eigenschaften aufweist.

6. Brillenglas nach einem der vorstehenden Ansprüche, wobei das Dünnstglas der Komponente A auf der Vorderfläche V_{DA} wenigstens eine Funktionsschicht F_{VA} und/oder das Dünnstglas der Komponente C auf der Rückfläche R_{DC} wenigstens eine Funktionsschicht F_{RC} umfasst.

7. Brillenglas nach Anspruch 6, wobei die wenigstens eine Funktionsschicht F_{VA} und/oder die wenigstens eine Funktionsschicht F_{RC} jeweils aus der Gruppe bestehend aus wenigstens einer Entspiegelungsschicht, wenigstens einer elektrisch leitfähigen oder halbleitenden Schicht, wenigstens einer Antibeschlagschicht und wenigstens einer Clean-Coat-Schicht ausgewählt ist.

8. Brillenglas nach einem der vorstehenden Ansprüche, **dadurch gekennzeichnet, dass** die Komponente B ein Brillenglas-Halbfertigprodukt oder ein fertiges Brillenglas umfasst.

9. Brillenglas nach einem der vorstehenden Ansprüche, **dadurch gekennzeichnet, dass** das polymere Material der Komponente B eine Kunststofffolie umfasst.

10. Brillenglas nach einem der vorstehenden Ansprüche, wobei Komponente B ein fertiges Brillenglas und Komponente C ein Dünnstglas umfasst, die Oberflächentopographie der Komponenten A, B und C jeweils plan, sphärisch, asphärisch, torisch oder atorisch ist, die Oberflächentopographie der jeweiligen Vorderfläche und der jeweiligen Rückfläche der Komponenten A und C gleich ist, die Oberflächentopographie der Komponente A gleich oder verschieden zu der Oberflächentopographie der Komponente C ist, die Oberflächentopographie der Komponenten A gleich oder verschieden zu der Oberflächentopographie der Vorderfläche der Komponente B und die Oberflächentopographie der Komponente C gleich oder verschieden zu der Oberflächentopographie der Rückfläche der Komponente B ist.

11. Verfahren zur Herstellung eines Brillenglases umfassend, ausgehend von der objektseitigen Vorderfläche des Brillenglases zur gegenüberliegenden Rückfläche des Brillenglases, wenigstens die Komponenten A, B und C, wobei die Komponente A ein Dünnstglas, die Komponente B wenigstens ein polymeres Material und/oder wenigstens ein mineralisches Glas, die Komponente C wenigstens eine Funktionsschicht Fc und/oder ein Dünnstglas umfasst und das Verfahren die folgenden Schritte umfasst:
i. Bereitstellen eines optional umgeformten Dünnstglases der Komponente A und optional Bereitstellen eines optional umgeformten Dünnstglases der Komponente C,
ii. optional Beschichten der Rückfläche R_{DA} des Dünnstglases der Komponente A mit wenigstens einer Funktionsschicht F_{RA},
iii. optional Beschichten der Vorderfläche V_{DC} des Dünnstglases der Komponente C mit wenigstens einer Funktionsschicht F_{VC},
iv. Bereitstellen eines Brillenglas-Halbfertigprodukts der Komponente B umfassend ein polymeres Material oder ein mineralisches Glas, wobei die optisch wirksame Zielfläche der Komponente B optional mit einer Funktionsschicht belegt sein kann,
v. Verbinden der optisch wirksamen Zielfläche der Komponente B mit der Rückfläche der Komponente A oder der Vorderfläche der Komponente C,
vi. Überführung der der optisch wirksamen Zielfläche gegenüberliegenden Fläche der Komponente B in eine ebenfalls optisch wirksame Zielfläche,
vii. Verbinden des in Schritt vi. erhaltenen Brillenglases umfassend die Komponenten A und B bzw. B und C mit dem Dünnstglas der Komponente C bzw. mit dem Dünnstglas der Komponente A oder Beschichten des in Schritt vi. erhaltenen Brillenglases umfassend die Komponenten A und B mit wenigstens einer Funktionsschicht Fc,
viii. optional Beschichten der Vorderfläche V_{DA} des Dünnstglases der Komponente A mit wenigstens einer Funktionsschicht F_{VA} sowie gegebenenfalls der Rückfläche R_{DC} des Dünnstglases der Komponente C mit wenigstens einer Funktionsschicht F_{RC},
ix. Formranden des in Schritt vii. oder viii. erhaltenen Brillenglases umfassend die Komponenten A, B und C.

12. Verfahren zur Herstellung eines Brillenglases umfassend, ausgehend von der objektseitigen Vorderfläche des Brillenglases zur gegenüberliegenden Rückfläche des Brillenglases, wenigstens die Komponenten A, B und C, wobei die Komponente A ein Dünnstglas, die Komponente B wenigstens ein polymeres Material und/oder wenigstens ein mineralisches Glas, die Komponente C wenigstens eine Funktionsschicht Fc und/oder ein Dünnstglas umfasst und das Verfahren die folgenden Schritte umfasst:
i. Bereitstellen eines optional umgeformten Dünnstglases der Komponente A und optional Bereitstellen eines optional umgeformten Dünnstglases der Komponente C,
ii. optional Beschichten der Rückfläche R_{DA} des Dünnstglases der Komponente A mit wenigstens einer Funktionsschicht F_{RA},
iii. optional Beschichten der Vorderfläche V_{DC} des Dünnstglases der Komponente C mit wenigstens einer Funktionsschicht F_{VC},
iv. Bereitstellen eines fertigen Brillenglases der Komponente B umfassend ein polymeres Material oder ein mineralisches Glas, wobei optional die Vorderfläche V_{B} des Brillenglas-Fertigfabrikats mit wenigstens einer Funktionsschicht F_{VB} und optional die Rückfläche R_{B} des Brillenglas-Fertigfabrikats mit wenigstens einer Funktionsschicht F_{RB} beschichtet ist,
v. Verbinden der optional beschichteten Rückfläche R_{DA} der Komponente A mit der optional beschichteten Vorderfläche V_{B} der Komponente B und a) Verbinden der optional beschichteten Rückfläche R_{B} mit der optional beschichteten Vorderfläche V_{DC} des Dünnstglases der Komponente C oder b) Beschichten der Rückfläche R_{B} der Komponente B mit wenigstens einer Funktionsschicht Fc,
vi. optional Beschichten der Vorderfläche V_{DA} des Dünnstglases der Komponente A mit wenigstens einer Funktionsschicht F_{VA} und optional Beschichten der Rückfläche R_{DC} des Dünnstglases der Komponente C mit wenigstens einer Funktionsschicht F_{RC},
vii. Formranden des in Schritt v. bzw. vi. erhaltenen Brillenglases umfassend die Komponenten A, B und C.

13. Verfahren nach einem der Ansprüche 11 bis 12, bei dem das Verbinden der zu verbindenden Komponenten A, B und C mittels eines Klebemittels, mittels eines Bonding-Verfahrens oder mittels Ansprengen erfolgt.

14. Verfahren nach einem der Ansprüche 11 bis 13, wobei die zu verbindenden Komponenten A, B und C mittels eines Klebemittels basierend auf der aminkatalysierten Thiolhärtung von Epoxidharzen bei einer Temperatur aus einem Bereich von 20°C bis 80°C miteinander verbunden werden.

15. Verwendung eines Dünnstglases mit einer mittleren Dicke aus einem Bereich von 10 µm bis 250 µm zur Herstellung eines Brillenglases, **dadurch gekennzeichnet, dass** das Brillenglas nach Aufprall einer 15,87 mm großen und 16,36 g schweren Stahlkugel aus einer Höhe von 1,27 m keine Beschädigung aufweist.
